(19) **Europäisches Patentamt / European Patent Office / Office européen des brevets**

(11) **EP 2 577 368 B2**

(12) **NOUVEAU FASCICULE DE BREVET EUROPEEN**
Après la procédure d'opposition

(45) Date de publication et mention de la décision concernant l'opposition:
**10.12.2025   Bulletin 2025/50**

(45) Mention de la délivrance du brevet:
**26.07.2023   Bulletin 2023/30**

(21) Numéro de dépôt: **11723911.1**

(22) Date de dépôt: **25.05.2011**

(51) Classification Internationale des Brevets (IPC):
**G02B 5/20** (2006.01)   **G02B 5/22** (2006.01)
**G02B 5/26** (2006.01)   **G02B 5/08** (2006.01)
**C03C 17/36** (2006.01)   **B32B 17/10** (2006.01)

(52) Classification Coopérative des Brevets (CPC):
**G02B 5/208; C03C 17/36; C03C 17/3613; C03C 17/3626; C03C 17/3639; C03C 17/3644; C03C 17/3647; C03C 17/3652; C03C 17/366; C03C 17/3681; G02B 5/0858**

(86) Numéro de dépôt international:
**PCT/EP2011/058540**

(87) Numéro de publication internationale:
**WO 2011/147864 (01.12.2011 Gazette 2011/48)**

(54) **VITRAGE DE CONTRÔLE SOLAIRE À FAIBLE FACTEUR SOLAIRE**

SONNENSCHUTZVERGLASUNG MIT NIEDRIGEM G-WERT

SOLAR CONTROL GLAZING WITH LOW SOLAR FACTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2010   BE 201000310**

(43) Date de publication de la demande:
**10.04.2013   Bulletin 2013/15**

(73) Titulaire: **AGC Glass Europe**
**1348 Louvain-la-Neuve (BE)**

(72) Inventeurs:
• **HEVESI, Kadosa**
  **6040 Jumet (BE)**
• **SICHA, Jan**
  **6040 Jumet (BE)**

(74) Mandataire: **Müller-Boré & Partner**
**Patentanwälte PartG mbB**
**Friedenheimer Brücke 21**
**80639 München (DE)**

(56) Documents cités:
| | |
|---|---|
| EP-A1- 0 645 352 | EP-A1- 0 645 352 |
| WO-A1-03/037056 | WO-A1-03/093188 |
| WO-A1-2005/012200 | WO-A1-2005/028391 |
| WO-A1-2005/051858 | WO-A1-2006/122900 |
| WO-A1-2006/122900 | WO-A1-2007/044721 |
| WO-A1-2007/044814 | WO-A1-2007/047266 |
| WO-A1-2009/029466 | WO-A1-2009/029466 |
| WO-A1-2010/142926 | WO-A1-2011/147875 |
| WO-A1-2012/115850 | WO-A2-2007/101963 |
| CN-A- 101 497 501 | US-A1- 2004 009 356 |
| US-A1- 2006 046 073 | US-A1- 2007 081 227 |
| US-A1- 2007 082 219 | US-A1- 2009 047 466 |
| US-B2- 7 659 002 | |

• D25 - Affidavit Mr Kadosa Hevesi
• D26 - Affidavit Ms Ingrid Marenne
• JOHNSON P. B., R. W. CHRISTY: "Optical constants of transition metals: Ti, V, Cr, Mn, Fe, Co, Ni, and Pd", PHYSICAL REVIEW 8, vol. 9, no. 12, 15 June 1974 (1974-06-15), pages 5056 - 5070, XP093280900, DOI: 10.1103/PhysRevB.9.5056
• D28 - Affidavit Mr Xavier Caillet
• D28a - Déclaration de monsieur Xavier Caillet en date du 1 avril 2025
• D30 - Statutory déclaration of Mr. Kadosa Hevesi
• ANONYMOUS: "Glas voor gebouwen - Bepaling van de toetredingseigenschappen voor licht en zon van glas / Verre dans la construction - Détermination des caractéristiques lumineuses et solaires des vitrages / Glass in building - Determination of luminous and solar characteristics of glazing - NBN EN 410", GEREGISTREERDE BELGISCHE NORM NBN EN 410, 23 March 2011 (2011-03-23), XP093280910

EP 2 577 368 B2

- ANONYMOUS: "SunGuard® High Selective Super Neutral 70/37", GUARDIAN SUNGUARD, 1 January 2010 (2010-01-01), XP093280916
- ANONYMOUS: "Verre et contrôle solaire ", GLAVERBEL, 1 January 2004 (2004-01-01), XP093280911
- D34 - Statutory déclaration of Mr. Kadosa Hevesi

**Description**

La présente invention se rapporte à un substrat transparent portant un empilage multicouche de contrôle solaire, ainsi qu'à un vitrage multiple incorporant au moins un tel substrat transparent portant un empilage multicouche de contrôle solaire.

Les empilages de contrôle solaire, aussi appelés empilages antisolaires, auxquels se rapporte la présente invention comprennent des couches fonctionnelles réfléchissant le rayonnement infrarouge, telle que des couches à base d'argent, auxquelles sont associés des revêtements diélectriques anti-réfléchissants qui servent à réduire la réflexion lumineuse et à contrôler d'autres propriétés de l'empilage telles que la couleur, mais qui servent également de revêtements d'accrochage et de protection pour les couches fonctionnelles. Les empilages de contrôle solaire contiennent couramment deux couches fonctionnelles entourées de couches diélectriques. Plus récemment, des empilages à trois couches fonctionnelles, voire plus de trois couches fonctionnelles, ont été proposés afin d'améliorer encore la protection solaire tout en conservant la plus grande transmission lumineuse possible. Chaque couche fonctionnelle est espacée d'au moins un revêtement diélectrique de telle sorte que chaque couche fonctionnelle soit entourée de revêtements diélectriques. Les différentes couches de l'empilage sont, par exemple, déposées par pulvérisation cathodique sous pression réduite assistée par champ magnétique, dans un dispositif bien connu de type magnétron. La présente invention n'est toutefois pas limitée à ce procédé particulier de dépôt de couche.

Ces empilages à contrôle solaire sont utilisés dans la réalisation de vitrages de protection solaire, ou vitrages antisolaires, afin de réduire le risque de surchauffe excessive, par exemple d'un espace clos ayant de grandes surfaces vitrées, dû à l'ensoleillement et ainsi réduire l'effort de climatisation à consentir en été. Le substrat transparent est alors souvent constitué d'une feuille de verre, mais il peut aussi par exemple être formé d'un film plastique tel que du PET (polyéthylène téréphtalate) qui est ensuite enfermé entre deux feuilles de verre à l'intervention d'un film polymère adhésif tel que du PVB (polyvinyle butyrale) ou l'éthylène acétate de vinyle EVA (Ethylene Vinyl Acetate) pour former un vitrage feuilleté, ou enfermé à l'intérieur d'un vitrage multiple.

Dans ce cas, le vitrage doit laisser passer le moins possible de rayonnement solaire énergétique total, c'est-à-dire qu'il doit présenter un facteur solaire (FS ou g) relativement faible. Il est cependant fortement souhaitable qu'il garantisse un certain niveau de transmission lumineuse ($T_L$) de manière à procurer un niveau d'éclairement suffisant à l'intérieur du bâtiment. Ces exigences quelque peu conflictuelles traduisent la volonté d'obtenir un vitrage présentant une sélectivité (S) élevée, définie par le rapport de la transmission lumineuse au facteur solaire. Ces empilages à contrôle solaire présentent également une faible émissivité qui permet de réduire la déperdition de chaleur par rayonnement infrarouge de grande longueur d'onde. Ils améliorent ainsi l'isolation thermique des grandes surfaces vitrées et réduisent les déperditions d'énergie et les coûts de chauffage en période froide.

La transmission lumineuse ($T_L$) est le pourcentage du flux lumineux incident, de l'Illuminant D65, transmis par le vitrage dans le domaine visible. Le facteur solaire (FS ou g) est le pourcentage du rayonnement énergétique incident qui est d'une part directement transmis par le vitrage et d'autre part absorbé par celui-ci puis rayonné dans la direction opposée à la source d'énergie par rapport au vitrage.

Ces vitrages antisolaires sont en général assemblés en vitrages multiples tels que des vitrages doubles ou triples dans lesquels la feuille de verre portant l'empilage est associée à une ou plusieurs autre feuille de verre, pourvue ou non de revêtement, l'empilage à contrôle solaire multicouche se trouvant au contact de l'espace intérieur entre les feuilles de verre.

Dans certains cas, on est amené à effectuer une opération de renforcement mécanique du vitrage, telle qu'une trempe thermique de la ou des feuilles de verre, pour améliorer la résistance aux contraintes mécaniques. On peut aussi éventuellement être amené à donner une courbure plus ou moins complexe aux feuilles de verre pour des applications particulières, à l'aide d'une opération de bombage à température élevée. Dans les processus de fabrication et de mise en forme des vitrages, il y a certains avantages à effectuer ces opérations de traitement thermique sur le substrat déjà revêtu au lieu de revêtir un substrat déjà traité. Ces opérations sont réalisées à une température relativement élevée, température à laquelle la couche fonctionnelle à base de matériau réfléchissant l'infrarouge, par exemple à base d'argent, a tendance à se détériorer et à perdre ses propriétés optiques et ses propriétés vis-à-vis du rayonnement infrarouge. Ces traitements thermiques consistent notamment à chauffer la feuille vitreuse à une température supérieure à 560°C dans l'air, par exemple entre 560°C et 700°C, et notamment aux environs de 640°C à 670°C, pour une durée d'environ 6, 8, 10, 12 ou même 15 minutes selon le type de traitement et l'épaisseur de la feuille. Dans le cas d'un traitement de bombage, la feuille vitreuse peut alors être bombée selon la forme désirée. Le traitement de trempe consiste alors à refroidir brutalement la surface de la feuille vitreuse, plate ou bombée, par des jets d'air ou de fluide de refroidissement afin d'obtenir un renforcement mécanique de la feuille.

Dans le cas où la feuille de verre revêtue doit subir un traitement thermique, il faut donc prendre des précautions toutes particulières pour réaliser une structure d'empilage qui soit apte à subir un traitement thermique de trempe et/ou de bombage, parfois référencé ci-après par l'expression « trempable », sans perdre ses propriétés optiques et/ou énergétiques qui en font sa raison d'être. Il faut notamment utiliser des matériaux diélectriques, pour former les revêtements diélectriques, qui supportent les températures élevées du traitement thermique sans présenter de modification structurelle néfaste. Des exemples de matériaux particulièrement adéquats pour cette utilisation sont l'oxyde mixte zinc-étain, et notamment le stannate de zinc, le nitrure de silicium et le nitrure d'aluminium. Il faut également veiller à ce que les couches fonctionnelles, par exemple à base d'argent, ne soient pas oxydées en cours de traitement, par exemple en s'assurant qu'il y ait, au moment du traitement, des couches sacrificielles capables de s'oxyder à la place de l'argent en captant l'oxygène libre.

Il est également souhaitable que les vitrages répondent à certains critères esthétiques en termes de réflexion lumineuse ($R_L$), c'est-à-dire le pourcentage du flux lumineux incident -de l'Illuminant D65- réfléchi par le vitrage dans le domaine visible, et de couleur en réflexion et en transmission. La demande du marché est un vitrage à réflexion lumineuse modérée, mais pas trop faible pour éviter l'effet « trou noir » lorsqu'on regarde une façade dans certaines conditions d'éclairage faible. La combinaison d'une haute sélectivité avec une réflexion lumineuse modérée conduit parfois à l'obtention de teintes pourpres en réflexion qui sont très peu esthétiques.

Les vitrages antisolaires sont aussi utilisés dans le domaine des vitrages automobiles, par exemple des pare-brise mais également des autres vitres du véhicule telles les vitres latérales, arrières ou les vitres du toit. Dans ce domaine, les vitres sont souvent feuilletées, c'est-à-dire que le substrat portant l'empilage est associé à un autre substrat transparent, portant ou non un empilage, à l'intervention d'un film plastique adhésif généralement en PVB, l'empilage antisolaire était disposé à l'intérieur du feuilleté au contact du PVB. Les vitres de véhicule doivent généralement être bombées pour s'adapter à la forme du véhicule. Lorsque le substrat est une feuille de verre, l'opération de bombage est réalisée à température élevée et le substrat muni de son empilage est dès lors soumis à un traitement thermique similaire au traitement de trempe, avec refroidissement rapide ou non, décrit ci-dessus avec en plus une opération de mise en forme tant que le substrat est à haute température.

Pour réduire la quantité de chaleur qui pénètre dans le local ou le véhicule au travers du vitrage, on empêche le rayonnement calorifique infrarouge invisible de traverser le vitrage en le réfléchissant. C'est le rôle des couches fonctionnelles à base d'un matériau réfléchissant le rayonnement infrarouge. C'est un élément essentiel dans l'empilage à contrôle solaire. Toutefois, une partie importante du rayonnement calorifique est également transmise par le rayonnement visible. Pour réduire la transmission de cette partie du rayonnement calorifique et aller au-delà de l'élimination de l'apport d'énergie par le rayonnement infrarouge, on est obligé d'abaisser le niveau de la transmission lumineuse.

Plusieurs solutions ont été proposées pour améliorer la protection solaire tout en conservant le maximum de transmission lumineuse, mais aucune solution ne fournit un vitrage vraiment satisfaisant.

La demande de brevet US 20090047466 A1 German et al propose un vitrage multiple dont une feuille de verre porte un empilage à trois couches fonctionnelles à base d'argent dans lequel les premier et dernier revêtements diélectriques comprennent un matériau absorbant diélectrique constitué par du TiN ou du NbN. Les revêtements diélectriques intermédiaires sont transparents et ne contiennent aucun matériau absorbant. La teinte obtenue en réflexion côté verre n'est pas satisfaisante car elle n'est pas assez neutre et elle tend vers le pourpre qui est une teinte non appréciée d'un point de vue commerciale. De plus, bien que le titulaire dit que la teinte est relativement stable, on constate sur les figures 9 et 10 que la dispersion de points montre que la teinte varie assez bien, aussi bien en réflexion côté substrat que côté empilage, lors d'une variation des épaisseurs de couches de l'empilage.

La demande de brevet WO 2009/029466 A1 au nom de PPG Industries décrit un vitrage feuilleté pour véhicule automobile dans lequel une feuille de verre porte un empilage à trois couches fonctionnelles à base d'argent. Les couches d'argent ont une épaisseur décroissante à partir de la feuille de verre qui les porte. Ce document décrit un empilage à transmission lumineuse élevée pouvant être utilisé pour former un pare-brise de véhicule automobile. Toutefois, pour des faibles facteurs solaires, par exemple de l'ordre de 25%, les propriétés optiques obtenues ne rencontrent pas les critères esthétiques souhaités d'un point de vue commerciale, notamment la teinte en réflexion est nettement pourpre et instable lors d'une variation de l'angle d'observation. D'autre part la sélectivité obtenue est relativement faible.

La demande de brevet EP 645352 A1 déposée par Saint-Gobain Vitrage décrit un vitrage antisolaire dont l'empilage comporte trois couches d'argent à épaisseur croissante en partant du verre. Le vitrage double antisolaire comprenant cet empilage présente un facteur solaire de 30 ou 34% selon les exemples 1 et 2 du document. Il y a une demande commerciale pour obtenir des facteurs solaires plus faibles, tout en conservant un maximum de transmission lumineuse, afin d'obtenir une meilleure protection solaire. De plus, une sélectivité élevée n'est obtenue qu'au détriment de la stabilité de la teinte en réflexion lors d'une fabrication industrielle.

L'un des objets de l'invention est de fournir un substrat transparent portant un empilage multicouche de contrôle solaire qui assure une protection solaire efficace avec une sélectivité élevée.

Un autre objet de l'invention est que le substrat revêtu présente un aspect plaisant, tant en transmission qu'en réflexion côté substrat, répondant à la demande commerciale, par exemple ayant notamment une teinte relativement neutre.

Un autre objet de l'invention est de permettre d'obtenir plus aisément un substrat revêtu qui présente une bonne stabilité angulaire de la teinte en réflexion, c'est-à-dire ayant une variation de teinte de très faible amplitude ou d'amplitude acceptable sans modification majeure de nuance de la teinte.

Un autre objet de l'invention est de fournir un substrat revêtu qui présente une faible variation de la teinte en réflexion observée côté substrat lorsqu'il y a une fluctuation des épaisseurs de couches pendant la durée de fabrication d'un lot de substrats revêtus ou un manque d'uniformité transversale suite à un taux de dépôt variable sur la longueur des cathodes.

Un autre objet de l'invention est de fournir un substrat revêtu pouvant être produit aisément en grande série à l'échelle industrielle à un prix de revient avantageux.

L'invention se rapporte à un substrat transparent portant un empilage multicouche de contrôle solaire comprenant au moins n couches fonctionnelles à base d'un matériau réfléchissant le rayonnement infrarouge et (n+1) revêtements diélectriques transparents de telle sorte que chaque couche fonctionnelle soit entourée par des revêtements diélectriques transparents, n étant supérieur ou égal à 3, caractérisé en ce que l'empilage comprend au moins une couche à caractère métallique absorbante dans le rayonnement visible située à l'intérieur de l'empilage, et en ce que le rapport de l'épaisseur optique du revêtement diélectrique transparent disposé entre la deuxième et la troisième couches fonctionnelles, en partant du substrat, sur l'épaisseur optique du revêtement diélectrique transparent final disposé au-delà de la dernière couche fonctionnelle est compris entre 1,25 et 3,0, de préférence entre 1,27 et 2,99, et en ce que la couche absorbante a une épaisseur d'au plus 7 nm et d'au moins 1 nm.

On a trouvé que cette combinaison de caractéristiques facilite l'obtention aisée de substrat revêtu à haute performance antisolaire, c'est-à-dire à faible facteur solaire, et à haute sélectivité, ayant un aspect esthétique agréable et stable. On a trouvé aussi qu'on peut atteindre plus aisément une valeur de b* en transmission inférieure à 4, de préférence inférieure à 3, et une variation angulaire, entre 0° et 55°, de a* en réflexion côté substrat inférieure à 3,5, de préférence inférieure à 2,5.

Ce résultat est surprenant car la présence d'une couche absorbante à caractère métallique tend à perturber le délicat équilibre entre teinte, stabilité, facteur solaire et transmission lumineuse.

Un revêtement diélectrique transparent est un revêtement qui laisse passer le rayonnement lumineux sans atténuation significative, c'est-à-dire que le coefficient d'extinction (k) n'est pas suffisant pour avoir un effet optique appréciable. Par exemple, le coefficient d'extinction (k) à 550 nm est de préférence inférieur à 0,3 et avantageusement inférieure ou égale à 0,1.

La variation de l'indice de réfraction des différents matériaux selon la longueur d'onde peut être sensiblement différente. Dans le cadre de la présente invention, l'épaisseur optique des diélectriques transparents sera calculée en utilisant la formule suivante :

$$\text{épaisseur optique} = d \text{ multiplié par } n_v,$$

dans laquelle $d$ est l'épaisseur géométrique (physique) de la couche considérée et $n_v$ est un indice de réfraction virtuel obtenu à l'aide de la formule suivante :

$$n_v = \left(0{,}6902 \times n(550)^2\right) - \left(0{,}165 \times n(550)\right) - 0{,}4643$$

dans laquelle $n(550)$ est l'indice de réfraction du matériau à la longueur d'onde de 550 nm.

Si un revêtement diélectrique transparent est composé de plusieurs couches, l'épaisseur optique totale du revêtement diélectrique transparent à considérer est la somme des épaisseurs optiques des différentes couches.

Le caractère métallique de la couche à caractère métallique absorbante dans le visible, ci-après dénommée simplement couche absorbante, peut par exemple être déterminé par une analyse XPS (X-Ray Photoelectron Spectroscopy) de l'empilage.

Aux fins de l'invention, la présence de la couche absorbante dans l'empilage et la propriété d'absorption lumineuse du substrat portant l'empilage due à cette couche doivent être détectées et mesurées dans le produit fini prêt à être assemblé dans un vitrage multiple ou dans un vitrage feuilleté. Ce qui veut dire que si le substrat revêtu doit subir un traitement thermique à température élevée, la couche absorbante doit être présente après le traitement thermique. En effet, une couche, telle une couche sacrificielle, peut être déposée sous forme métallique dans le dispositif de pulvérisation cathodique (un magnétron par exemple) et se faire oxyder par le plasma oxydant lors du dépôt de la couche suivante et/ou se faire oxyder par le traitement thermique ultérieur du substrat revêtu, de telle sorte que la couche ne soit plus métallique dans le produit fini et qu'elle soit transparente au rayonnement visible.

Aux fins de l'invention, on considérera que la présence dans l'empilage du produit fini d'un matériau à caractère métallique autre que le matériau des couches fonctionnelles sera révélateur de la présence d'une couche absorbante dans l'empilage. Les matériaux habituellement utilisés pour constituer les couches fonctionnelles sont des matériaux à base d'argent, d'or, de platine, de cuivre ou d'aluminium. Ces matériaux s'utilisent seuls ou en alliage avec une faible quantité d'un autre élément. Par exemple, l'argent est souvent utilisé avec une faible quantité de palladium pour améliorer sa résistance chimique notamment. Ces éléments ont des degrés de performance divers pour réfléchir le rayonnement infrarouge. Si un élément d'une certaine performance est utilisé comme couche fonctionnelle, un élément à plus faible performance peut aussi être utilisé pour former la couche absorbante. D'autre part, tout autre métal que ceux cités ci-dessus présent dans le produit fini, comme indiqué ci-dessus, pourra constituer la couche absorbante.

Le matériau de la couche absorbante peut éventuellement être légèrement oxydé. Toutefois, une sous-oxydation comme on l'entend ici n'est pas un oxyde dont le degré d'oxydation est un peu inférieur au niveau de stoechiométrie stable du matériau considéré tel qu'on l'entend pour rendre conducteur un matériau qui est isolant lorsqu'il est totalement oxydé ou pour englober des oxydes qui ne sont pas à l'état stoechiométrique stable. Le rapport atomique d'oxygène par rapport au métal du matériau de la couche absorbante à caractère métallique est, selon le matériau considéré, au moins inférieur à 75%, de préférence à 70%, avantageusement à 60% et favorablement inférieur à 50%, du rapport atomique de l'oxyde stoechiométrique stable qui est le plus couramment formé par la technique de pulvérisation cathodique réactive sous pression réduite dans un magnétron. La couche absorbante peut par exemple être déposée sous cette forme fortement sous-oxydée. De préférence toutefois, la couche absorbante est déposée sous forme métallique à partir d'une cible métallique en atmosphère neutre.

Le caractère métallique d'une couche de ce type peut être démontré notamment par un profilage XPS (X-ray Photoelectron Spectroscopy avec un canon de profilage utilisant des ions d'argon dans la gamme d'énergie de 1 à 3 keV) de la couche en question dans l'empilage. L'analyse par déconvolution de la spéciation du ou des éléments chimiques constituant la couche absorbante peut montrer la présence de l'état métallique d'un ou plusieurs de ces éléments, attestant du caractère métallique de la couche. Etant donné la sensibilité de cette technique d'analyse, il est cependant tout à fait possible que l'analyse de spéciation d'une couche absorbante à caractère métallique montre en outre la présence de formes oxydées ou nitrurées du ou des éléments constitutifs de la couche, par exemple en raison de pollutions de la couche en cours de fabrication ou en cours de profilage. La couche sera cependant toujours réputée avoir un caractère métallique. Dans certains cas, l'intensité de signal des formes oxydées ou nitrurées pourra même être dominante par rapport à celle des formes métalliques, mais la seule présence du signal lié à la forme métallique sur une portion de la couche suffira à qualifier cette couche de couche absorbante à caractère métallique. En effet, comme exposé ci-avant dans le cas des couches sacrificielles, une couche à caractère métallique déposée au contact d'une autre couche diélectrique d'oxyde ou de nitrure peut être significativement oxydée ou nitrurée, soit par le plasma de dépôt de la dite couche diélectrique déposée ensuite, soit par un traitement thermique ultérieur qui permet la migration d'oxygène ou d'azote en provenance de la dite couche diélectrique vers la couche à caractère métallique. L'analyse XPS de la couche à caractère métallique montrera alors typiquement un gradient dans le profil de spéciation avec une diminution importante du signal de la forme métallique à l'approche de l'interface avec la dite couche diélectrique. Dans ces cas de figure, pour une couche absorbante à caractère métallique constituée de matériaux très réactifs, tels le Ti ou le Zr, et d'une épaisseur peu importante, par exemple inférieure à 7 nm, l'analyse en profilage XPS peut aussi ne plus montrer aucune trace de la forme métallique pure (Ti°), notamment en raison d'une auto-pollution de la zone inter-faciale de la couche à caractère métallique vers l'intérieur de la couche au fur et à mesure de l'analyse en profilage. On trouvera alors dans l'analyse en profilage XPS plusieurs signaux provenant de formes oxydées ou nitrurées liés chacune à un étage d'oxydation différent du ou des éléments constitutifs de la couche absorbante. Ces signaux présenteront un gradient d'intensité dans le profil de la couche avec une prédominance du signal provenant de l'étage d'oxydation le plus bas qui s'établira au fur et à mesure que l'on s'éloigne de l'interface avec la couche voisine responsable de l'oxydation ou de la nitruration d'interface. Dans le cadre de la présente invention, pour des éléments réactifs à plusieurs étages d'oxydation stables, la prédominance du signal XPS lié à l'étage d'oxydation stable le plus bas du ou des éléments constitutifs de la couche absorbante sur une partie au moins de la couche absorbante est également considérée comme un témoignage du caractère métallique de la dite couche absorbante. Par exemple, pour une couche absorbante de Titane à caractère métallique déposée sous une couche d'oxyde mixte de zinc-étain, l'analyse révèle typiquement 3 étages d'oxydation : $Ti^{2+}$, $Ti^{3+}$ et $Ti^{4+}$. L'étage d'oxydation le plus bas pour une couche à caractère métallique de ce type est donc $Ti^{2+}$, dont l'intensité relative dépassera typiquement 55% sur la portion de la couche la plus éloignée de la couche d'oxyde voisine.

Lorsque la couche barrière de protection de la couche fonctionnelle est une couche de métal sacrificiel, cette couche est en fait oxydée et transformée en diélectrique transparent dans le produit fini. Cette couche étant très mince a peu d'influence sur les propriétés optiques. Toutefois, si l'empilage multicouche doit supporter un traitement thermique à température élevée telle qu'une trempe et/ou un bombage, cette couche de métal sacrificiel est rendue plus épaisse pour former une réserve métallique à oxyder suffisante pour protéger la couche fonctionnelle. Substantiellement toute l'épaisseur de cette couche est transformée en oxyde. Dans les différents calculs de rapport d'épaisseur selon l'invention incluant des épaisseurs de revêtement diélectrique, l'épaisseur de cette couche de métal sacrificiel oxydé doit être incluse dans l'épaisseur totale du revêtement diélectrique concerné pour autant que son épaisseur physique sous forme oxydée dépasse 2,5 nm, ce qui correspond à environ 1,4 nm de métal tel que déposé pour une barrière en Ti. Les calculs de rapports ne tiennent ainsi pas compte de la mince couche barrière habituellement utilisée dans les empilages qui ne doivent pas subir de traitement thermique à température élevée. L'épaisseur de la portion de la couche restée éventuellement sous forme métallique, pouvant servir notamment de couche absorbante, ne doit bien sûr pas être incluse. Si une couche externe de protection en métal sacrificielle est utilisée pour protéger l'empilage en attente de traitement thermique et oxydée par ce traitement dans le produit fini, l'épaisseur de la couche oxydée doit être comptée dans les calculs de rapports. Il en est de même aussi si le métal sacrificiel est nitruré et forme un diélectrique transparent.

Dans la présente description, lorsque des épaisseurs géométriques de couches d'un empilage multicouche sont données, ou lorsqu'on se réfère à des épaisseurs géométriques, elles sont tout d'abord mesurées de manière globale sur le substrat revêtu à l'aide d'un appareil de fluorescence des rayons X (XRF) avec détection à dispersion de longueur d'onde (WDS). Cet appareil est calibré pour chaque matériau sur base de 5 à 10 échantillons revêtus du matériau considéré dans des épaisseurs connues, réparties entre 2 et 300 nm, tant en monocouches qu'en couches intercalées dans des empilages variés. Si un matériau est présent en couches multiples dans un empilage, l'épaisseur totale de ce matériau est déduite d'une analyse XRF telle que décrite ci-dessus puis, la répartition de l'épaisseur totale sur chacune des couches individuelles de l'empilage est distribuée à l'aide d'une mesure en profilage de l'empilage, par exemple à l'aide d'un profilage XPS dont il est fait référence ci-dessus. Il faut noter ici que dans la littérature, les épaisseurs des couches sacrificielles, notamment, sont, au contraire de la présente invention, généralement données sous la forme d'une épaisseur équivalente de l'oxyde correspondant. Par exemple, l'épaisseur des couches sacrificielles de protection de l'argent réalisées par dépôt de titane métallique sur l'argent, qui se transforme en $TiO_2$ sous l'action du plasma oxydant servant à déposer la couche diélectrique suivante, est en générale donnée en épaisseur équivalente de $TiO_2$ parce que c'est le matériau final qui se retrouve dans le revêtement terminé et que c'est sous cette forme que l'épaisseur est mesurée dans le produit fini par calibration avec $TiO_2$. La différence est significative. En effet, dans le cas du titane, l'épaisseur géométrique exprimée en épaisseur équivalente de $TiO_2$ est proche du double de l'épaisseur géométrique du titane métallique tel que déposé.

La présence de la couche absorbante dans un empilage à trois couches fonctionnelles à base d'argent sur un substrat monolithique en verre clair ordinaire de 6 mm d'épaisseur conduit à une absorption lumineuse totale du substrat revêtu d'au moins 25%, de préférence d'au moins 30% et de manière encore préférée d'au moins 35%.

Des métaux adéquats pour former une couche absorbante incluent notamment NiCr, W, Nb, Ta, Ti, Zr, Cr, Ni, Mo, CoCr, Al, Y, Zn, Mg, leurs alliages et de préférence Ti et ses alliages. Lorsque le substrat revêtu doit subir un traitement thermique, on utilise de préférence un des métaux suivants : Pd, Au, Pt, Ir, Rh, Ru, Os et leurs alliages, ou en alliage avec un des autres métaux cité ci-avant en début de paragraphe.

De préférence, le rapport de l'épaisseur optique du revêtement diélectrique transparent disposé entre la deuxième et la troisième couche fonctionnelle, en partant du substrat, (ci-après aussi dénommé troisième revêtement diélectrique transparent ou D3) sur l'épaisseur optique du revêtement diélectrique transparent final disposé au-delà de la dernière couche fonctionnelle est compris entre 1,3 et 2,6, avantageusement compris entre 1,6 et 2,6. Lorsqu'il n'y a que trois couches fonctionnelles (n=3), la dernière couche fonctionnelle est la troisième en partant du substrat. S'il y a quatre couches fonctionnelles, la dernière couche est la quatrième, et ainsi de même s'il y a plus de quatre couches fonctionnelles.

La stabilité de la teinte dans une fabrication en série à grande échelle est un élément important pour garantir la fabrication d'un produit de qualité constante. A des fins de comparaison, la variation de la teinte en réflexion suite à une fluctuation des épaisseurs des couches a été quantifiée à l'aide d'une formule mathématique. L'index de variation de teinte en fabrication a été appelé « Deltacol » et a été défini par la relation suivante :

$$Deltacol = 0,5x\left(\sqrt{\frac{\Delta a*}{1,2}} + \sqrt{\frac{\Delta b*}{2,4}}\right)$$

dans laquelle $\Delta a*$ et $\Delta b*$ sont les différences entre les valeurs les plus élevées et les valeurs les plus faibles respectivement de $a*$ et de $b*$ trouvées lorsque les épaisseurs de chaque couche d'argent et de chaque revêtement diélectrique transparent de l'empilage varie individuellement de plus ou moins 2,5%. Les valeurs $a*$ et $b*$ sont les valeurs CIELAB 1976 $L*a*b*$ mesurées sous l'Illuminant D65/10°.

De préférence, le rapport de l'épaisseur optique du troisième revêtement diélectrique transparent D3 sur l'épaisseur optique du revêtement diélectrique transparent disposé entre la première et la deuxième couche fonctionnelle (ci-après aussi dénommé deuxième revêtement diélectrique transparent ou D2) est compris entre 0,3 et 1,7, avantageusement inférieur à 1,1, et favorablement inférieur à 0,7. On a trouvé que cette caractéristique permet d'atteindre aisément une valeur de Deltacol en réflexion côté empilage inférieure à 8. Préférentiellement, ce rapport est inférieur à 0,7. On atteint ainsi plus aisément une valeur de Deltacol en réflexion côté empilage inférieure à 5,5 et une valeur de Deltacol en réflexion côté substrat inférieure à 2,65.

De préférence, le rapport de l'épaisseur optique du deuxième revêtement diélectrique transparent D2 sur l'épaisseur optique du revêtement diélectrique transparent disposé entre le substrat et la première couche fonctionnelle (ci-après aussi dénommé premier revêtement diélectrique transparent ou D1) est compris entre 1,15 et 3,4, avantageusement entre 1,2 et 3.

De préférence, le rapport de l'épaisseur optique du premier revêtement diélectrique transparent D1 sur l'épaisseur optique du revêtement diélectrique transparent disposé au-delà de la dernière couche fonctionnelle est compris entre 0,3 et 3,3, avantageusement entre 0,5 et 2,7 et favorablement entre 0,8 et 2,5. On atteint ainsi plus aisément des valeurs de b* en transmission inférieures à 1, voire négatives.

Le rapport de l'épaisseur optique du troisième revêtement diélectrique transparent D3 sur l'épaisseur géométrique de la troisième couche fonctionnelle en partant du substrat (ci-après aussi dénommée IR3) est compris entre 6,4 et 11.

De préférence, le rapport de l'épaisseur géométrique de la troisième couche fonctionnelle IR3 sur l'épaisseur géométrique de la deuxième couche fonctionnelle en partant du substrat (ci-après aussi dénommée IR2) est compris entre 0,45 et 2,8, avantageusement entre 0,5 et 1,7 et favorablement entre 0,5 et 1,2. Ces valeurs préférentielles de rapport IR3/IR2 permettent d'atteindre plus aisément une valeur de Deltacol en réflexion côté empilage inférieure à 5,5.

Le respect de ces différents rapports entre les épaisseurs optiques des revêtements diélectriques transparents et/ou les épaisseurs géométriques des couches fonctionnelles discutés ci-avant favorise l'obtention d'un empilage à haute performance énergétique de contrôle solaire ayant une teinte agréable et stable et une sélectivité élevée, tout particulièrement lorsque ces rapports sont réalisées tous en combinaison. Cet empilage peut être aisément fabriqué en grande série dans une installation industrielle car il présente une bonne stabilité de teinte dans une tolérance de fabrication facile à respecter. On a trouvé qu'on peut aussi obtenir plus aisément un niveau de réflexion examiné côté empilage plus faible et notamment inférieur à 20%. De cette façon, la réflexion à l'intérieur d'un local, lorsque l'empilage est disposé en position 2 (la position 1 étant de manière conventionnelle la face extérieure), n'est pas trop élevée pour ne pas gêner la vision au travers du substrat revêtu.

Selon l'invention, la couche à caractère métallique absorbante dans le rayonnement visible est située à l'intérieur de l'empilage, c'est-à-dire entre le substrat et au moins la dernière portion du revêtement diélectrique transparent final disposé au-delà de la dernière couche fonctionnelle, de telle sorte qu'il y ait toujours au moins une épaisseur significative de matière diélectrique transparent au-dessus d'elle, par rapport au substrat. Une couche externe de protection métallique finale qui est parfois utilisée pour protéger l'empilage durant un traitement thermique ultérieur, par exemple une couche de quelques nm de Ti, et qui s'oxydera au cours du dit traitement thermique pour devenir un oxyde transparent, n'est pas considéré comme une couche absorbante selon l'invention. C'est une couche externe de protection qui n'est pas située à l'intérieur de l'empilage.

Selon un mode de réalisation de l'invention, on dispose une portion d'un revêtement diélectrique transparent entre une des couches fonctionnelles et une couche absorbante, de telle sorte que la couche absorbante se trouve à l'intérieur du revêtement diélectrique transparent. Dans ce mode de réalisation, on préférera, sans toutefois que ce ne soit une nécessité pour la réalisation de l'invention, utiliser une cathode céramique pour déposer la partie de revêtement diélectrique transparent disposée entre la dite couche absorbante et une des couches fonctionnelles voisines afin de pouvoir déposer la couche fonctionnelle et la couche absorbante, avec optionnellement une couche sacrificielle distincte, dans une même atmosphère neutre ou tout au moins peu oxydante, de sorte à faciliter le processus de dépôt.

De préférence, la dite couche absorbante est disposée à proximité immédiate d'une couche fonctionnelle. Cette disposition s'est avérée avantageuse pour diverses raisons. Non seulement cette proximité de la couche fonctionnelle est bénéfique pour obtenir un bon résultat optique, mais de plus, étant donné que la couche absorbante a un caractère métallique, elle peut être déposée dans la même zone de dépôt à atmosphère neutre que la couche fonctionnelle, ce qui facilite le processus de formation de l'empilage. Dans la fabrication d'empilage complexe ayant un grand nombre de couches, c'est un avantage significatif qui limite la dimension du dispositif. D'autre part, le caractère métallique de la couche absorbante permet d'obtenir un taux de dépôt relativement élevé. Cet avantage combiné avec la proximité de la couche fonctionnelle facilite le processus de formation de l'empilage qui est déjà très sophistiqué par ailleurs à cause de la présence d'au moins trois couches fonctionnelles.

Par l'expression « à proximité immédiate », il faut comprendre qu'il n'y a pas de revêtement diélectrique ou de partie de revêtement diélectrique d'épaisseur supérieure à 7 nm, de préférence supérieure à 5 nm, avantageusement supérieure à 3 nm et même 1 nm, entre la couche fonctionnelle et la couche absorbante. Par contre, cela signifie qu'il peut y avoir, par exemple, une mince couche d'oxyde obtenue à partir de la pulvérisation cathodique d'une cible céramique d'oxyde dans une atmosphère neutre ou à très faible proportion d'oxygène. Il peut s'agir par exemple d'une mince couche à base de $TiO_2$, éventuellement dopé par exemple au zirconium ou au niobium ou sous forme d'un oxyde mixte de $TiO_2$ avec les oxydes de Zr ou Nb, ou à base de ZnO dopé à l'aluminium, mince couche obtenue à partir d'une cathode céramique de l'oxyde correspondant. Il peut aussi s'agir d'une mince couche de NiCrOx, ou d'une couche similaire, par exemple suivie d'une couche absorbante de NiCr.

La couche absorbante, à proximité immédiate de la couche fonctionnelle, peut être disposée au-dessus ou en-dessous de la couche fonctionnelle. Avantageusement, elle est disposée au-dessus. Cela permet de réduire le risque d'échauffement de l'empilage lorsque le rayonnement incident entre par le substrat, car une partie du rayonnement calorifique est déjà réfléchie par la couche fonctionnelle. Lorsque l'empilage risque de s'échauffer au-delà d'un certain niveau et que le substrat portant l'empilage est en verre, il y a un risque de fracture du substrat à cause des chocs thermiques lors de l'ensoleillement du vitrage avec des zones d'ombre. De ce fait, le substrat doit subir un traitement de renforcement mécanique sous forme d'une trempe thermique à haute température, ce qui entraîne un supplément du coût de fabrication.

De préférence, la couche absorbante est disposée directement sur une couche fonctionnelle en ayant une interface commune avec elle. On peut ainsi combiner la fonction de protection de la couche fonctionnelle par une couche sacrificielle avec la fonction de couche absorbante en une seule et même couche avec le même matériau. Le matériau de la couche absorbante peut dès lors être un des métaux souvent utilisé pour les couches sacrificielles, par exemple le titane, le NiCr, le Nb ou le Zr. Cela simplifie grandement le processus de dépôt de l'empilage. Il faut bien comprendre dans ce cas qu'une couche sacrificielle telle qu'utilisée de manière connue sur la couche fonctionnelle est oxydée en grande partie, de préférence totalement, par le plasma de dépôt du revêtement diélectrique déposé ensuite, de telle sorte que cette couche devienne essentiellement transparente pour la lumière visible. Dans le cas où la couche absorbante joue également le rôle de couche sacrificielle selon cette réalisation préférée de la présente invention, elle sera plus épaisse qu'une simple couche sacrificielle. De la sorte il restera, après oxydation éventuelle par le plasma de dépôt de la couche suivante et éventuellement après tout traitement thermique ultérieur conduisant à l'oxydation de cette couche, tel qu'un traitement thermique de trempe et/ou de bombage, une couche absorbante pour le rayonnement visible qui présentera encore, au moins sur une partie de son épaisseur, un caractère métallique selon la définition donnée ci-dessus. Dans ce cas, la couche telle que déposée sera plus épaisse que ce qui est nécessaire pour obtenir le niveau d'absorption requis par la couche absorbante, une partie de cette couche, jouant le rôle de barrière sacrificielle, étant devenue transparente en cours de fabrication du substrat revêtu prêt à l'emploi. Il faut bien noter que l'épaisseur de métal transformé en oxyde pendant le processus de dépôt dépend de plusieurs facteurs et notamment de la vitesse du convoyeur transportant le substrat dans le dispositif de dépôt de couches en relation avec la puissance appliquée aux cathodes (pour un dispositif de pulvérisation cathodique), ce qui se traduit par un certain niveau oxydant du plasma et par un temps de séjour sous ce plasma. C'est pourquoi une distinction a été faite dans la description, en particulier dans les exemples de réalisation, entre la partie absorbante, sous forme de « couche absorbante », et la partie sacrificielle oxydée, sous forme de « couche de protection » ou « couche barrière », même si ces deux parties résultent en réalité du dépôt d'une seule et même couche d'un matériau unique et que le passage de l'une à l'autre se fait de manière graduelle par oxydation progressive.

De préférence, une couche absorbante est disposée entre les première et deuxième couches fonctionnelles. Cette disposition de la couche absorbante va à l'encontre de l'enseignement du document US 20090047466 A1 cité ci-avant, mais on a trouvé qu'on peut ainsi, de manière surprenante, obtenir aisément un facteur solaire très bas, par exemple inférieur à 28% en vitrage double et même inférieur à 26% et à 24%, en limitant l'absorption énergétique à 48% au plus, de préférence à 45% au plus, ce qui évite l'obligation de devoir effectuer un traitement thermique de trempe, c'est-à-dire de renforcement mécanique, pour supporter les chocs thermiques sans risque de bris du support lorsque celui-ci est en verre ordinaire ou en matériau cassant similaire. De plus, cette disposition selon l'invention permet d'obtenir aisément une réflexion lumineuse observée côté substrat qui ne soit pas trop faible, par exemple d'au moins 9 à 11%, pour éviter un effet « trou noir » lorsqu'on observe le vitrage sous certaines conditions de faible éclairage ambiant. Cette disposition selon l'invention permet en outre d'obtenir une très bonne stabilité angulaire, ainsi qu'une faible variation de la teinte en réflexion lorsqu'il y a une fluctuation des épaisseurs de couches pendant la durée de fabrication d'un lot de substrats revêtus ou un manque d'uniformité transversale suite à un taux de dépôt variable sur la longueur des cathodes.

Selon un mode de réalisation, l'empilage ne comprend de préférence qu'une seule couche absorbante. Ceci simplifie avantageusement le processus de fabrication et facilite l'ajustement des propriétés de l'empilage. D'une part, la localisation de toute la matière absorbante en un seul endroit de l'empilage en facilite sa fabrication par le fait que la complexité de la structure de l'empilage n'est pas augmentée par l'existence de différents sites d'absorption lumineuse. D'autre part, la localisation unique de l'absorption lumineuse fournit une plus grande souplesse pour la mise au point des propriétés optiques de l'empilage et peut notamment améliorer la stabilité angulaire de la teinte en réflexion et augmenter les tolérances de fabrication.

Selon un autre mode de réalisation, l'empilage comprend de préférence plusieurs couches absorbantes, chacune d'elle étant disposée à proximité immédiate d'une couche fonctionnelle. Cette disposition permet de répartir l'absorption lumineuse et énergétique sur l'ensemble de l'empilage en tenant compte des portions réfléchies par les couches fonctionnelles.

Comme il a été dit ci-avant, les couches fonctionnelles sont avantageusement formées à partir de métal noble. Elles peuvent être à base d'argent, d'or, de palladium, de platine ou leur mélange ou alliage, mais aussi à base de cuivre ou d'aluminium, seul, en alliage entre eux ou en alliage avec un ou plusieurs des métaux nobles. De préférence, toutes les couches fonctionnelles sont à base d'argent. C'est un métal noble qui présente une très grande efficacité de réflexion du rayonnement infrarouge. Il est mis en oeuvre aisément dans un dispositif magnétron et son prix de revient n'est pas prohibitif, surtout eu égard à son efficacité. Avantageusement, l'argent est dopé avec quelques pourcents de palladium, d'aluminium ou du cuivre, à raison par exemple de 1 à 10%, ou bien encore, on peut utiliser un alliage d'argent.

Selon certains modes avantageux de réalisation de l'invention, il y a quatre couches fonctionnelles, ce qui permet d'obtenir plus aisément une sélectivité particulièrement élevée pour de faibles facteurs solaires. Selon d'autres modes avantageux de réalisation de l'invention, il y a uniquement trois couches fonctionnelles, ce qui est un compromis favorable entre l'obtention d'une sélectivité élevée et la complexité de l'empilage qui influence les coûts de fabrication.

Selon l'invention, la couche absorbante a une épaisseur d'au plus 7 nm, avantageusement au plus 5,5 nm, favorablement au plus 4,5 nm et même 4 nm, et d'au moins 1 nm.

De préférence, lorsque l'empilage à contrôle solaire multicouche est déposé sur une feuille de verre float clair sodo-calcique ordinaire de 6 mm d'épaisseur, l'absorption lumineuse totale $A_L$ du vitrage monolithique revêtu est d'au moins 25%, et de préférence d'au moins 30%. Cette valeur d'absorption lumineuse est mesurée sur le produit fini, c'est-à-dire que si la feuille de verre revêtue est destinée à subir un traitement thermique à température élevée telle qu'une opération de trempe et/ou de bombage pour former le produit fini, la valeur de l'absorption lumineuse est mesurée après ce traitement thermique. C'est un rapport avantageux entre la faible quantité de matière absorbante utilisée et l'efficacité de l'effet sur le facteur solaire.

De préférence, la variation de teinte Deltacol (telle que définie ci-dessus) en réflexion regardée côté substrat est inférieure à 3, avantageusement inférieure à 2,7, préférentiellement inférieure à 2,4 et favorablement inférieure à 2,2. On obtient ainsi un substrat revêtu dont l'aspect en réflexion côté substrat est peu sensible aux aléas de la fabrication en série à l'échelle industrielle qui peuvent engendrer des fluctuations dans les épaisseurs des couches en cours de production.

De préférence, la variation de teinte Deltacol en réflexion regardée côté empilage est inférieure à 10, et avantageusement inférieure à 5. De même, on obtient ainsi un substrat revêtu dont l'aspect en réflexion côté empilage est peu sensible aux aléas de la fabrication en série à l'échelle industrielle qui peuvent engendrer des fluctuations dans les épaisseurs des couches en cours de production.

De préférence, les variations de a* et de b* en réflexion côté substrat, lors d'une variation de l'angle d'observation comprise entre 0 et 55°, sont d'au plus 3,7 en valeur absolue, avantageusement d'au plus 3,1. De préférence, la variation de a* en réflexion côté substrat, lors d'une variation de l'angle d'observation comprise entre 0 et 55°, est comprise entre -3,1 et 2,5. Ceci donne une stabilité de teinte particulièrement avantageuse, car l'aspect global d'une façade varie peu selon l'angle d'observation, par exemple selon le déplacement de l'observateur.

De préférence, lorsque l'empilage à contrôle solaire multicouche est déposé sur une feuille de verre float clair sodo-calcique ordinaire de 6 mm d'épaisseur et que cette feuille revêtue est montée en double vitrage avec une autre feuille de verre float clair sodo-calcique ordinaire de 4 mm d'épaisseur non revêtue, le facteur solaire FS du vitrage double est inférieur à 28%, avantageusement inférieur à 26% et la transmission lumineuse $T_L$ est inférieure à 57%, avantageusement à 54% et de préférence inférieure ou égale à 51%. On peut ainsi obtenir un vitrage transparent formant un écran antisolaire efficace.

De préférence, le substrat portant l'empilage présente une sélectivité supérieure à 1,9, avantageusement supérieure à 1,94 et favorablement supérieure à 1.98 lorsque l'empilage est déposé sur une feuille de verre float clair sodo-calcique ordinaire de 6 mm d'épaisseur et que cette feuille revêtue est montée en double vitrage avec une autre feuille de verre float clair sodo-calcique ordinaire de 4 mm d'épaisseur non revêtue.

Les revêtements diélectriques transparents sont bien connus dans le domaine des couches déposées par pulvérisation cathodique. Les matières adéquates sont nombreuses et il n'est pas utile d'en faire la liste ici. Ce sont en général des oxydes, oxy-nitrures ou nitrures métalliques. Parmi les plus courantes, on peut citer à titre d'exemple $SiO_2$, $TiO_2$, $SnO_2$, ZnO, ZnAlOx, $Si_3N_4$, AIN, $Al_2O_3$, $ZrO_2$, $Nb_2O_5$, YOx TiZrYOx, TiNbOx, HfOx, MgOx, TaOx, CrOx et $Bi_2O_3$, et leurs mélanges. On peut également citer les matériaux suivants : AZO, ZTO, GZO, NiCrOx, TXO, ZSO, TZO, TNO, TZSO, TZAO et TZAYO. L'expression « AZO » se rapporte à un oxyde de zinc dopé avec de l'aluminium ou à un oxyde mixte de zinc et d'aluminium, obtenu de préférence à partir d'une cathode céramique formée par l'oxyde à déposer, soit en atmosphère neutre ou légèrement oxydante. De même, les expressions ZTO ou GZO se rapportent respectivement à des oxydes mixtes de titane et de zinc ou de zinc et de gallium, obtenus à partir de cathodes céramiques, soit en atmosphère neutre ou légèrement oxydante. L'expression TXO se rapporte à de l'oxyde de titane obtenu à partir d'une cathode céramique d'oxyde de titane. L'expression ZSO se rapporte à un oxyde mixte zinc-étain obtenu soit à partir d'une cathode métallique de l'alliage déposé sous atmosphère oxydante ou à partir d'une cathode céramique de l'oxyde correspondant, soit en atmosphère neutre ou légèrement oxydante. Les expressions TZO, TNO, TZSO, TZAO ou TZAYO se rapportent respectivement à des oxydes mixtes titane-zirconium, titane-niobium, titane-zirconium-étain, titane-zirconium-aluminium ou titane-zirconium-aluminium-yttrium, obtenus à partir de cathodes céramiques, soit en atmosphère neutre ou légèrement oxydante. Tous ces matériaux cités ci-avant peuvent être utilisés pour former les revêtements diélectriques transparents utilisés dans la présente invention.

De préférence, au moins un des revêtements diélectriques transparents comprend au moins une couche à base d'un oxyde mixte zinc-étain contenant au moins 20% en poids d'étain, par exemple environ 50% pour former $Zn_2SnO_4$. Cet oxyde est très utile en tant que revêtement diélectrique transparent dans un empilage apte à subir un traitement thermique.

De préférence, le revêtement diélectrique transparent inférieur disposé entre la feuille de matière vitreuse et la couche fonctionnelle comprend au moins un oxyde mixte zinc-étain contenant au moins 20% en poids d'étain, et le revêtement diélectrique transparent externe comprend également au moins un oxyde mixte zinc-étain contenant au moins 20% en poids d'étain. Cette disposition est très favorable pour protéger la couche absorbante et la couche fonctionnelle aussi bien vis-à-vis de l'oxydation provenant de l'extérieur que de l'oxygène provenant de la matière vitreuse.

De préférence, le revêtement diélectrique transparent disposé sous une ou plusieurs, couches fonctionnelles comprend une couche à base d'un oxyde de zinc, éventuellement dopé, par exemple à l'aluminium ou au gallium, en contact direct avec la ou les couches fonctionnelles. L'oxyde de zinc peut avoir un effet particulièrement favorable sur la stabilité et la résistance à la corrosion de la couche fonctionnelle, notamment lorsqu'il s'agit d'argent. Il est également favorable à l'amélioration de la conductibilité électrique d'une couche à base d'argent, et donc à l'obtention d'une faible émissivité, notamment lors du traitement thermique.

Avantageusement, le revêtement diélectrique transparent disposé sous chaque couche fonctionnelle comprend une couche à base d'un oxyde mixte zinc-étain n'ayant pas plus d'environ 20% en poids d'étain et au moins environ 80% en poids de zinc, de préférence pas plus d'environ 10% d'étain et au moins environ 90% de zinc, en contact direct avec la ou les couches fonctionnelles. Cet oxyde mixte à haute teneur en oxyde de zinc sous et en contact direct avec la couche fonctionnelle, particulièrement lorsqu'elle est à base d'argent, est avantageux pour la tenue de la couche fonctionnelle au traitement thermique à haute température du type trempe et/ou bombage. L'association de cet oxyde mixte à haute teneur en zinc sous la couche fonctionnelle avec un oxyde mixte zinc-étain contenant au moins 20% en poids d'étain dans les diélectriques inférieur et externe constitue la structure la plus avantageuse pour la bonne tenue de l'empilage lors d'un traitement thermique à haute température.

De préférence, le substrat est une feuille de verre sodo-calcique ordinaire. C'est le substrat le mieux adapté pour servir de base à un vitrage à contrôle solaire. De préférence, le substrat est une feuille de verre extra-clair ayant une transmission lumineuse supérieure à 90%, voire supérieure ou égale à 91%, et même supérieure ou égale à 92%. Un substrat particulièrement préféré est le verre vendu sous la marque CLEARVISION® par la société AGC Glass Europe.

Selon un mode de réalisation avantageux, les épaisseurs géométriques des première, deuxième et troisième couches fonctionnelles (respectivement IR1, IR2 et IR3), en partant du substrat, sont croissantes. Cette configuration, particulièrement lorsqu'elle est associée avec un rapport de l'épaisseur optique de D2 sur l'épaisseur optique de D1 compris entre 1,25 et 3,1, et avec un rapport de l'épaisseur optique de D3 sur l'épaisseur géométrique de IR3 compris entre 6,3 et 13, facilite l'obtention d'une sélectivité particulièrement élevée pour un facteur solaire très bas tel qu'un facteur solaire inférieur à 28% en vitrage double comme discuté ci-avant, notamment une sélectivité égale ou supérieure à 1,98, en combinaison avec une teinte en transmission à composante bleue renforcée, sans tendance trop marquée vers le domaine des verts-jaunes, c'est-à-dire avec une valeur de b* en transmission inférieure ou égale à 1, et de préférence à 0. En effet, un problème particulièrement gênant des sélectivités élevées à faible facteur solaire est la tendance naturelle vers des teintes vertes non désirées d'un point de vue commercial. Cette disposition permet également d'obtenir en même temps une réflexion lumineuse examinée côté verre qui n'est pas trop élevée, notamment inférieure à 19% en double vitrage, mais surtout elle permet d'obtenir des réflexions lumineuses aussi faibles que 8 à 9%. Cette disposition permet aussi d'obtenir aisément une faible valeur de Deltacol en réflexion côté substrat. De préférence, ce mode de réalisation est en outre associé avec un rapport de l'épaisseur optique de D3 sur D2 compris entre 0,5 et 1,7, avantageusement compris entre 0,5 et 0,8 ou entre 1,25 et 1,7 et/ou avec un rapport d'épaisseur géométrique des couches IR3 sur IR2 compris entre 1 et 2,8, avantageusement compris entre 1,8 et 2,8 et/ou un rapport de l'épaisseur optique de D3 sur l'épaisseur optique du dernier revêtement diélectrique transparent compris entre 1,6 et 3, avantageusement compris entre 2,35 et 2,75 et/ou un rapport des épaisseurs optiques du revêtement D1 sur le dernier revêtement diélectrique transparent compris entre 0,3 et 2,1 avantageusement compris entre 1,4 et 2,4. Il est en outre avantageux de respecter tous ces rapports simultanément.

Selon un autre mode de réalisation avantageux, les épaisseurs géométriques des première, deuxième et troisième couches fonctionnelles, en partant du substrat, sont décroissantes. Dans cette configuration décroissante des épaisseurs des couches fonctionnelles, le rapport de l'épaisseur optique du troisième revêtement diélectrique transparent D3 sur l'épaisseur géométrique de la troisième couche fonctionnelle IR3 est de préférence compris entre 7 et 11. Dans cette configuration décroissante des épaisseurs des couches fonctionnelles, le rapport de l'épaisseur optique du premier revêtement diélectrique transparent D1 sur l'épaisseur optique du revêtement diélectrique transparent disposé au-delà de la dernière couche fonctionnelle est de préférence compris entre 1 et 2,5. Cette configuration, particulièrement en combinaison avec les dits rapports, facilite l'obtention d'un faible facteur solaire avec un minimum d'absorption énergétique, par exemple inférieure ou égale à 42% et même à 39%, ce qui est avantageux par le fait que cela permet d'obtenir un substrat revêtu à très faible facteur solaire, notamment compris entre 23% et 25%, qui ne nécessite pas le renforcement mécanique par trempe thermique du substrat revêtu comme discuté ci-avant. De plus, cette configuration permet d'obtenir aisément une très faible variation de a* en réflexion côté substrat lors d'une variation de l'angle d'observation entre 0 et 55°, par exemple comprise entre -1,5 et 1,5. De préférence, ce mode de réalisation est en outre associé avec un rapport de l'épaisseur optique de D3 sur D2 compris entre 0,3 et 0,7, et/ou avec un rapport d'épaisseur géométrique des couches IR3 sur IR2 compris entre 0,5 et 1,1, et/ou un rapport de l'épaisseur optique de D3 sur l'épaisseur optique du dernier revêtement diélectrique transparent compris entre 1,3 et 2,6, et/ou un rapport d'épaisseurs optique des revêtements D2 sur D1 compris entre 1,6 et 3. Il est en outre avantageux de respecter tous ces rapports simultanément.

Selon un autre mode de réalisation avantageux, l'épaisseur géométrique de la deuxième couche fonctionnelle IR2 est supérieure d'au moins 5%, de préférence d'au moins 10%, aux épaisseurs géométriques des première et troisième couches fonctionnelles. Cette configuration, particulièrement lorsqu'elle est associée avec un rapport de l'épaisseur optique de D3 sur l'épaisseur géométrique d'IR3 compris entre 7,2 et 13, de préférence entre 7,2 et 10, et avec un rapport de l'épaisseur optique de D1 sur l'épaisseur optique du dernier revêtement diélectrique transparent compris entre 1,3 et 3,3, de préférence entre 1,6 et 2,7, facilite l'obtention d'une faible valeur de Deltacol en réflexion côté couche, notamment inférieure à 3. Cette disposition permet également d'obtenir en même temps une réflexion lumineuse examinée côté verre qui est suffisamment élevée, notamment supérieure à 17% en double vitrage, par exemple entre 17 et 20%, de sorte que le vitrage donne un certain éclat à la façade du bâtiment si tel est l'effet souhaité. De préférence, ce mode de réalisation est en outre associé avec un rapport de l'épaisseur optique de D3 sur D2 compris entre 0,4 et 1,1, avantageusement compris entre 0,4 et 0,75 et/ou avec un rapport d'épaisseur géométrique des couches IR3 sur IR2 compris entre 0,4 et 0,9, et/ou un rapport de l'épaisseur optique de D3 sur l'épaisseur optique du dernier revêtement diélectrique transparent compris entre 1,75 et 3, et/ou un rapport d'épaisseurs optiques des revêtements D2 sur D1 compris entre 1,6 et 2,7. Il est en outre avantageux de respecter tous ces rapports simultanément.

Selon un autre mode de réalisation avantageux, les épaisseurs géométriques des trois couches fonctionnelles en partant du substrat sont égales à moins de 10% de différence, de préférence égales à moins de 8% et avantageusement égales à moins de 4%. Cette configuration, particulièrement lorsqu'elle est associée avec un rapport de l'épaisseur optique de D1 sur l'épaisseur optique du dernier revêtement compris entre 1,2 et 2,1, et avec un rapport de l'épaisseur optique de D3 sur l'épaisseur optique de D2 compris entre 0,5 et 0,8, facilite l'obtention d'une teinte bleutée en transmission, c'est-à-dire b* inférieur à 1, de préférence inférieur à 0, ainsi qu'une très faible variation de a* en réflexion côté substrat lors d'une variation de l'angle d'observation entre 0 et 55°, par exemple comprise entre -1,2 et 0,8. De préférence, ce mode de réalisation est en outre associé avec un rapport de l'épaisseur optique de D3 sur l'épaisseur géométrique d'IR3 compris entre 8 et 10, et/ou avec un rapport d'épaisseur géométrique des couches IR3 sur IR2 compris entre 0,9 et 1,1, et/ou un rapport de l'épaisseur optique de D3 sur l'épaisseur optique du dernier revêtement diélectrique transparent compris entre 2,15 et 2,6, et/ou un rapport d'épaisseurs optique des revêtements D2 sur D1 compris entre 1,5 et 2,6. Il est en outre avantageux de respecter tous ces rapports simultanément.

Selon un autre mode de réalisation avantageux, l'épaisseur géométrique de la deuxième couche fonctionnelle en partant du substrat est inférieure d'au moins 10% à l'épaisseur géométrique d'au moins l'une des première et troisième couches fonctionnelles, et inférieure ou égale à l'épaisseur de l'autre de ces deux couches fonctionnelles. De préférence, l'autre de ces deux couches fonctionnelles a une épaisseur géométrique supérieure d'au moins 4%, avantageusement d'au moins 8% et favorablement d'au moins 10%, à l'épaisseur de la dite deuxième couche fonctionnelle. Cette configuration, particulièrement lorsque le rapport de l'épaisseur optique du revêtement diélectrique transparent D3 sur l'épaisseur optique du revêtement diélectrique transparent final disposé au-delà de la dernière couche fonctionnelle en partant du substrat est inférieur à 2,6, et de préférence inférieur à 2,2, avantageusement inférieure 2, permet d'obtenir aisément un très faible facteur solaire, par exemple de l'ordre de 25%, combiné avec une sélectivité élevée, par exemple proche de ou d'au moins 2, avec un minimum d'absorption énergétique, de l'ordre de ou même inférieur à 40%. Ce rapport de l'épaisseur géométrique de D3 sur le dernier revêtement diélectrique transparent est favorablement supérieur à 1,3. De plus, cette configuration, combinée avec le dit rapport des épaisseurs optiques des troisième et dernier revêtements diélectriques transparents, permet d'éviter aisément une teinte verte en réflexion côté substrat sans risque d'obtenir une teinte pourpre, c'est-à-dire a* supérieur à -5, de préférence compris entre -1 et -3, tout en ayant une réflexion lumineuse côté substrat suffisamment élevée pour éviter l'effet « trou noir » mais pas trop élevée pour éviter l'éblouissement, par exemple de l'ordre de 16 à 20% en vitrage double. De préférence, ce mode de réalisation est en outre associé avec un rapport de l'épaisseur optique de D3 sur l'épaisseur géométrique d'IR3 compris entre 6,6 et 10, de préférence compris entre 7 et 9,2, ainsi qu'avec un rapport d'épaisseur géométrique des couches IR3 sur IR2 compris entre 1 et 2,6, et/ou un rapport d'épaisseur optique de D3 sur D2 compris entre 0,4 et 1,1, et/ou un rapport d'épaisseur optique de D1 sur le dernier revêtement diélectrique transparent compris entre 0,5 et 2,7, et/ou un rapport d'épaisseurs optique des revêtements D2 sur D1 compris entre 1,15 et 3,4. Il est en outre avantageux de respecter tous ces rapports simultanément. On a trouvé que ceci permet de réduire la coloration verte de la teinte en réflexion côté substrat, par exemple a* égale ou supérieure à -4, de préférence supérieure à -3 et même supérieure à -2. De plus ceci permet aussi d'obtenir des valeurs d'absorption énergétiques particulièrement faibles, par exemple inférieures à 40% et même inférieures à 38%.

L'invention s'étend à un vitrage multiple comprenant au moins un substrat portant un empilage multicouche de contrôle solaire tel que décrit ci-dessus. Le substrat est de préférence une feuille de verre sodo-calcique ordinaire. De préférence, le substrat est une feuille de verre extra-clair ayant une transmission lumineuse supérieure à 90%, voire supérieure ou égale à 91%, et même supérieure ou égale à 92%. Un substrat particulièrement préféré est le verre vendu sous la marque CLEARVISION® par la société AGC Glass Europe. L'invention fournit un vitrage multiple antisolaire très utile.

Le substrat revêtu de l'empilage multicouche est de préférence assemblé en vitrage multiple, par exemple en double ou en triple vitrage, de telle sorte que, lorsqu'il est monté sur un bâtiment, le rayonnement solaire frappe d'abord la feuille de verre revêtue du côté dépourvu d'empilage, puis l'empilage, puis la seconde feuille de verre, et puis éventuellement la troisième s'il s'agit du triple vitrage. L'empilage se trouve donc, selon la convention généralement utilisée, en position 2. C'est dans cette position que la protection solaire est la plus efficace.

De préférence, lorsque le substrat portant l'empilage multicouche est une feuille de verre clair ordinaire de 6 mm et qu'elle est montée en vitrage double avec une feuille de verre clair ordinaire sans revêtement de 4 mm d'épaisseur, le vitrage double ainsi formé possède un facteur solaire inférieur à 30%, par exemple entre 23 et 26%, une transmission lumineuse égale ou supérieure à 44%, une réflexion lumineuse extérieure, donc côté verre de la feuille de verre revêtue, comprise entre 7 et 19%, de préférence entre 11 et 19%, avec une teinte en réflexion extérieure bleutée caractérisée par une valeur de b* inférieure à a*.

L'invention s'étend aussi à un vitrage feuilleté comprenant au moins substrat transparent tel que décrit ci-dessus assemblé à une feuille de matière vitreuse à l'intervention d'une matière plastique adhésive. Un tel vitrage est avantageusement utilisé comme vitrage d'un véhicule automobile.

L'invention sera maintenant décrite plus en détail, de manière non limitative, à l'aide des exemples de réalisations préférées ci-après.

**Exemples** :

**Exemple 1.**

Une feuille de verre float clair sodo-calcique ordinaire de 2 m sur 1 m et de 6 mm d'épaisseur est placée dans un dispositif de pulvérisation cathodique, assisté d'un champ magnétique, à pression réduite (environ 0,3 à 0,8 Pa) du type magnétron. Sur cette feuille de verre, on dépose un empilage à contrôle solaire multicouche de la manière expliquée ci-après.

Un premier revêtement diélectrique transparent est déposé sur la feuille de verre. Ce premier revêtement est formé de deux couches d'oxydes mixtes de zinc-étain déposés dans une atmosphère réactive constituée d'un mélange d'argon et d'oxygène, à partir de cathodes d'alliages zinc-étain de compositions différentes. Le premier oxyde mixte zinc-étain est formé à partir de cathodes d'un alliage zinc-étain à 52% en poids de zinc et 48% en poids d'étain pour former la structure spinelle de stannate de zinc $Zn_2SnO_4$. Le second oxyde mixte de zinc-étain $ZnSnO_x$, d'environ 9,2 nm d'épaisseur géométrique, est déposé à partir de cibles d'un alliage zinc-étain à 90% en poids de zinc et 10% en poids d'étain. L'épaisseur de la première couche d'oxydes mixtes de zinc-étain est le complément par rapport à l'épaisseur de la seconde couche pour atteindre l'épaisseur géométrique correspondante à l'épaisseur optique du premier revêtement diélectrique transparent D1 indiquée dans le tableau 1 ci-dessous. Dans le tableau 1, les valeurs d'épaisseurs sont données en Angström (Å).

Une couche fonctionnelle IR1 réfléchissant l'infrarouge, formée d'argent à partir d'une cible d'argent pratiquement pur pulvérisée dans une atmosphère neutre d'argon, est ensuite déposée sur le premier revêtement diélectrique transparent D1. L'épaisseur géométrique de cette couche IR1 est donnée dans le tableau 1 en Angström (Å).

Une couche de titane Ti est déposée à partir d'une cible de titane en atmosphère neutre directement sur la couche d'argent en ayant une interface commune avec elle. En premier lieu, cette couche sert pour partie de couche absorbante Abs1 dans le produit fini. Elle est destinée de plus à former aussi une couche de protection pour la couche d'argent IR1, ou couche barrière B1, en tant que métal sacrificiel. L'atmosphère oxydante du plasma lors du dépôt de la couche suivante, décrit ci-après, va oxyder la couche sacrificielle B1 de titane. L'épaisseur géométrique totale de la couche de Ti telle que déposée est suffisante pour qu'il reste dans le produit fini du Ti à caractère métallique qui forme la couche absorbante Abs1 d'épaisseur géométrique spécifiée dans le tableau 1 qui est de 1,3 nm pour l'exemple 1. Pour obtenir cette épaisseur de couche absorbante dans un produit fini qui n'est pas traitable thermiquement à haute température, on a en fait réellement déposé 2,7 nm de titane sur la couche d'argent. La couche de protection B1 a donc une épaisseur géométrique de 1,4 nm, indiqué en Angström dans le tableau 1. Pour un empilage destiné à subir un traitement de trempe, de bombage et/ou de durcissement (qui est un traitement de trempe dans lequel le refroidissement rapide est moins prononcé), on déposerait dans les mêmes conditions entre 3,9 et 4,7 nm de titane. L'épaisseur de la couche de protection transformée en oxyde qui dépasse 2,5 nm (valeur correspondante en oxyde aux 1,4 nm d'épaisseur géométrique de Ti de la couche de protection B1 telle que déposée dans le cas d'un empilage non trempable) devra être additionnée à l'épaisseur du revêtement diélectrique qui suit pour le calcul des rapports selon l'invention, donc à l'exclusion bien sûr du métal absorbant dans le visible.

En variante, on peut aussi déposer en plus, directement sur la couche absorbante Abs1 avant de déposer le revêtement diélectrique suivant, une fine couche de 1 à 2 nm de TiOx ou de ZnOx éventuellement dopé à l'aluminium, en atmosphère neutre à partir d'une cathode céramique respectivement d'oxyde de titane ou de zinc, éventuellement dopés. Cette fine couche constitue alors la couche barrière B1 de protection de l'argent et du Ti de la couche absorbante. La couche totale de Ti est alors seulement de 1,3 nm.

De la même manière, les couches suivantes sont ensuite déposées sur la couche (barrière) de protection B1 : Un second revêtement diélectrique transparent D2, une deuxième couche fonctionnelle IR2, une couche sacrificielle B2 en Ti de 1,4 nm ne constituant pas, dans cet exemple 1, une couche absorbante dans le produit fini, un troisième revêtement diélectrique transparent D3, une troisième couche fonctionnelle IR3, une couche de Ti d'épaisseur géométrique totale 2,8 nm sont déposés sur la couche B1. Cette dernière couche de Ti est destinée à former dans le produit fini une couche absorbante Abs3 dont l'épaisseur géométrique de 1,4 nm est indiquée dans le tableau 1, ainsi qu'une couche sacrificielle de protection B3 dont l'épaisseur géométrique est aussi de 1,4 nm. Les deux couches absorbantes sont donc, selon l'invention, situées à l'intérieur de l'empilage. Ensuite, un quatrième et dernier revêtement diélectrique transparent D4 est déposé sur la couche de Ti. Ce quatrième revêtement diélectrique transparent D4 est formé de deux couches d'oxydes mixtes de zinc-étain déposés dans une atmosphère réactive constituée d'un mélange d'argon et d'oxygène à partir de cathodes d'alliages zinc-étain de compositions différentes. Le premier oxyde mixte de zinc-étain $ZnSnO_x$, d'environ 9,2 nm d'épaisseur géométrique, est déposé à partir de cibles d'un alliage zinc-étain à 90% en poids de zinc et 10% en poids d'étain, ci-après dénommé ZSO9. Le second oxyde mixte zinc-étain est formé à partir de cathodes d'un alliage zinc-étain à 52% en poids de zinc et 48% en poids d'étain pour former la structure spinelle de stannate de zinc $Zn_2SnO_4$, ci-après dénommé ZSO5. L'épaisseur de cette seconde couche d'oxydes mixtes de zinc-étain est le complément par rapport à l'épaisseur de la première couche pour atteindre l'épaisseur géométrique correspondante à l'épaisseur optique du quatrième revêtement diélectrique transparent D4 indiquée dans le tableau 1 ci-dessous.

Les seconde et troisième couches fonctionnelles réfléchissant l'infrarouge, IR2 et IR3, sont formées d'argent à partir d'une cible d'argent pratiquement pur pulvérisée dans une atmosphère neutre d'argon, de la même manière que la couche IR1.

Les second et troisième revêtements diélectriques transparents, respectivement D2 et D3, sont formés chacun respectivement de deux couches d'oxydes mixtes de zinc-étain déposés dans une atmosphère réactive constituée d'un mélange d'argon et d'oxygène à partir de cathodes d'alliages zinc-étain de compositions différentes. Le premier oxyde mixte zinc-étain de chacun de ces deux revêtements diélectriques transparents est formé à partir de cathodes d'un alliage zinc-étain à 52% en poids de zinc et 48% en poids d'étain pour former la structure spinelle de stannate de zinc $Zn_2SnO_4$. Le second oxyde mixte de zinc-étain $ZnSnO_x$, de chacun de ces deux revêtements diélectriques transparents, d'environ 18,4 nm d'épaisseur géométrique, est déposé à partir de cibles d'un alliage zinc-étain à 90% en poids de zinc et 10% en poids d'étain. L'épaisseur de la première couche d'oxydes mixtes de zinc-étain de chacun de ces deux revêtements est le complément par rapport à l'épaisseur de la seconde couche de chacun de ces deux revêtements pour atteindre l'épaisseur géométrique correspondante respectivement aux épaisseurs optiques des deuxième et troisième revêtements diélectriques transparents D2 et D3 indiquées dans le tableau 1 ci-dessous.

Dans le tableau 1, on a aussi indiqué les valeurs des différents rapports d'épaisseurs des revêtements diélectriques transparents et couches fonctionnelles discutés ci-avant. Comme discuté ci-dessus, ces rapports sont calculés sans tenir compte de l'épaisseur des couches de métal sacrificiel de protection B1, B2 et B3, chacune de 1,4 nm de Ti.

Cette feuille de verre revêtue est ensuite assemblée en double vitrage avec une autre feuille de verre clair de 4 mm, le revêtement étant disposé côté de l'espace intérieur du double vitrage. L'espace entre les deux feuilles est de 15 mm et l'air y est remplacé à 90% par de l'argon. En observant le double vitrage côté verre du substrat revêtu, l'empilage étant placé en position 2, c'est-à-dire qu'on voit d'abord le vitrage pourvu de l'empilage observé côté verre, puis la feuille de verre clair sans couche, on note les propriétés optiques et thermiques indiquées dans le tableau 2. Dans la présente invention, les conventions suivantes sont utilisées pour les valeurs mesurées ou calculées. La transmission lumineuse ($T_L$), la réflexion lumineuse ($R_L$), l'absorption lumineuse ($A_L$) (pourcentage du flux lumineux -de l'Illuminant D65- absorbé par le vitrage dans le domaine visible) sont mesurées avec l'Illuminant D65/2°. En ce qui concerne la teinte en réflexion et la teinte en transmission, les valeurs CIELAB 1976 (L*a*b*) sont mesurées avec l'Illuminant D65/10°. Le facteur solaire (FS ou g) est calculé selon la norme EN410.

Dans le tableau 2 les valeurs de sélectivité (S) et de Deltacol sont également indiquées, ainsi que les valeurs des variations de a* et b* en réflexion côté substrat lors d'une variation de l'angle d'observation entre 0 et 55°, appelées respectivement « Shift a* » et « Shift b* ». Deltacol ($R_V$) signifie que l'indice de variation est obtenu en réflexion côté substrat, tandis que Deltacol ($R_C$) signifie que l'indice de variation est obtenu côté empilage. Pour les valeurs de teintes, « ($T_L$) » signifie que la valeur est mesurée en transmission, « ($R_C$) » signifie que la valeur est mesurée en réflexion côté empilage (couche) et « ($R_V$) » signifie que la valeur est mesurée en réflexion côté substrat (verre). La colonne $A_E$ du tableau 2 reprend les valeurs d'absorption énergétique du substrat revêtu en feuille simple, calculées selon la norme EN410.

On constate que les teintes en réflexion obtenues sont agréables et correspondent à la demande commerciale. Le niveau de réflexion côté substrat n'est pas trop faible, ce qui évite le « trou noir » tout en évitant l'effet miroir. Les variations angulaires de teinte sont faibles et tout à fait acceptables, et la stabilité de fabrication est particulièrement bonne.

En variante, on a remplacé l'oxyde mixte zinc-étain des différents revêtements diélectriques transparents par une des successions suivantes de couches pour D1, D2 et/ou D3 : $TiO_2$/ZnO :Al ou TZO/$TiO_2$/ZnO ou $SnO_2$/ZnO/$SnO_2$/ZnO ou ZnO:Al/ZSO5/ZnO, par une des successions suivantes pour D1 : $Si_3N_4$ZnO ou AlN/ZnO, et une des successions suivantes pour D4 : ZnO/$SnO_2$ ou ZnO/TZO ou ZnO:Al/ZSO5 ou ZnO/$SnO_2$/$Si_3N_4$ ou ZnO/$SnO_2$/AlN, avec

optionnellement une couche de protection externe. A chaque fois, les épaisseurs géométriques des différents constituants ont été adaptées en fonction de leur indice de réfraction virtuel (tel que décrit plus haut) pour obtenir l'épaisseur optique du revêtement diélectrique transparent correspondant telle qu'indiquée dans le tableau 1. L'indice de réfraction $n$ (550) réel, à la longueur d'onde de 550 nm, des matériaux diélectriques utilisés sont les suivants : pour $TiO_2$, $n(550) = 2,5$ ; pour $Si_3N_4$, $n(550) = 2,04$ ; pour $Al_2O_3$, $n(550) = 1,8$ ; pour ZSO5 et ZSO9, $n(550) = 2,03$; pour AIN, $n(550) = 1,9$ ; et pour TZO, $n(550) = 2,26$. On a obtenu sensiblement les mêmes propriétés.

Selon d'autres variantes, on a utilisé du Nb, du Cu, un alliage ZnAl, un alliage ZnTi, du Cr, du Zn ou du NiCr pour former les couches absorbantes Abs1 et Abs3. Au moment du dépôt, on a déposé une épaisseur suffisante pour obtenir la même valeur d'absorption lumineuse totale sur le produit fini. La couche sacrificielle sur IR2 était du Ti.

Selon d'autres variantes encore, on a remplacé dans le revêtement diélectrique transparent D4 la séquence d'oxydes mixtes de zinc-étain par la séquence $ZnO:Al/TiO_2$ ou TZO, par la séquence $ZnO:Al/SnO_2/TiO_2$ ou TZO, ou encore par la séquence $ZnO:Al/ZSO5/TiO_2$ ou TZO.

Selon une autre variante, la couche barrière B2, formée de métal sacrificiel Ti, est remplacée par une couche TXO, c'est-à-dire une couche $TiO_2$ obtenue à partir d'une cathode céramique de $TiO_x$ par pulvérisation cathodique en atmosphère neutre ou légèrement oxydante. Ceci permet de réduire l'émissivité de l'empilage.

**Exemples 2 à 24 et 26 à 29.**

Les exemples 2 à 24 et 26 à 29 ont été réalisés de la même manière, selon les mêmes structures et avec les mêmes matériaux que l'exemple 1. Dans ces exemples toutefois, les épaisseurs optiques des différents revêtements et les épaisseurs géométriques des différentes couches fonctionnelles ont été modifiées selon les indications du tableau 1. En ce qui concerne les revêtements diélectriques transparents, le même principe que dans l'exemple 1 a été utilisé, c'est-à-dire qu'ils sont formés de deux couches dont une des couches a une épaisseur fixe et l'autre couche a l'épaisseur complémentaire pour obtenir l'épaisseur optique indiquée dans le tableau. En ce qui concerne les différentes couches absorbantes, lorsqu'une des valeurs Abs1, Abs2 ou Abs3 est nulle, cela signifie qu'il n'y a pas de couche absorbante à cet endroit de l'empilage dans le produit fini et que la couche sacrificielle Ti utilisée a été convertie en oxyde TiOx en cours du processus de dépôt des couches suivantes. Les valeurs non nulles indiquées dans les colonnes Abs1, Abs2, Abs3 correspondent aux épaisseurs géométriques des couches absorbantes dans le produit fini. Comme on le voit dans le tableau, toutes les couches absorbantes sont disposées à l'intérieur de l'empilage.

En variante, les couches barrières B2 et/ou B3 sont formées par une couche TXO, c'est-à-dire une couche TiO2 obtenue à partir d'une cathode céramique de TiOx par pulvérisation cathodique en atmosphère neutre ou légèrement oxydante. On parvient ainsi à réduire l'émissivité de l'empilage et donc à améliorer la sélectivité. L'exemple 25 est un exemple comparatif, repris dans les tableaux 1 et 2, et montre un empilage hors invention.

**Exemple comparatif 1.**

L'exemple comparatif 1 (C1), repris dans les tableaux 1 et 2, montre un empilage hors invention dont la structure est décrite par la demande de brevet US 20090047466 A1 German et al.

Dans cet exemple comparatif, il n'y a pas de revêtement diélectrique transparent D1, c'est une couche absorbante de 9 nm de TiN déposée sur le verre qui forme en même temps un revêtement diélectrique absorbant la lumière. Les couches de protection B1 et B2 sont formées de 5 nm de $TiO_2$, déposé à partir de cathode céramique de $TiO_2$, les revêtements diélectriques transparents D2 et D3 sont formés de ZnSnOx, la couche absorbante Abs3 est formée de TiN et D4 est formé de $Si_3N_4$. Les trois couches fonctionnelles sont formées d'argent. Le substrat est en verre.

Dans les rapports indiqués au tableau 1, la couche absorbante TiN sur le verre n'est pas comptée en tant que diélectrique puisqu'elle n'est pas transparente. Les épaisseurs optiques sont calculées selon la formule indiquée plus haut en utilisant l'indice de réfraction virtuel. L'indice de réfraction n(550) du nitrure de silicium est de 2,04, celui de l'oxyde zinc-étain est de 2,03 et l'indice de réfraction n(550) de $TiO_2$ est de 2,5. Pour les calculs, l'épaisseur des barrières de $TiO_2$ dépassant 2,5 nm, soit 2,5 nm (5 nm - 2,5 nm), est ajoutée à l'épaisseur du revêtement diélectrique transparent correspondant.

Les propriétés indiquées au tableau 2 pour cet exemple C1 ont été calculées selon EN410 sur base des données spectrales divulguées dans le document German et al. On constate que les propriétés obtenues ne sont pas satisfaisantes, et en particulier les teintes en réflexion sont très colorées et les réflexions lumineuses sont très faibles, ce qui donne un effet « trou noir » particulièrement en réflexion côté substrat.

**Exemple 30.**

L'exemple 30 est un exemple de réalisation de l'invention qui comprend quatre couches fonctionnelles d'argent. Il y a dès lors cinq revêtements diélectriques transparents, le cinquième revêtement diélectrique transparent étant nommé D5.

La composition des différents revêtements diélectriques transparents est la même que dans l'exemple 1, excepté que dans l'exemple 30 le revêtement D4 a la même composition que le revêtement diélectrique transparent D3 de l'exemple 1 et que le revêtement diélectrique transparent D5 a la même composition que le revêtement diélectrique transparent D4 de l'exemple 1.

L'épaisseur optique du revêtement D1 est de 38,3 nm, celle du revêtement D2 est de 81,8 nm, celle du revêtement D3 est de 123,8 nm, celle du revêtement D4 est de 171,5 nm, et celle du revêtement D5 est de 72,5 nm. Les épaisseurs géométriques des couches fonctionnelles en argent sont respectivement les suivantes : IR1 = 4 nm, IR2 = 9,8 nm, IR3 = 14 nm et IR4 = 18 nm. Sur la première couche d'argent IR1, on a déposé une couche de protection ordinaire en métal sacrificiel de 1,4 nm qui est devenue transparente dans le produit fini. Une couche de protection en métal sacrificiel Ti, destinée à former en même temps la couche absorbante Abs2 dans le produit fini, est déposée à partir d'une cible de titane en atmosphère neutre directement sur la couche d'argent IR2 en ayant une interface commune avec elle. L'atmosphère oxydante du plasma lors du dépôt de la couche suivante va oxyder partiellement cette couche de titane. L'épaisseur géométrique de la couche de Ti telle que déposée est suffisante pour qu'il reste dans le produit fini du Ti à caractère métallique qui forme la couche absorbante Abs2 d'une épaisseur de 4 Å. Pour obtenir cette épaisseur de couche absorbante dans un produit fini qui n'est pas traitable thermiquement à haute température, on a en fait réellement déposé 1,8 nm de titane sur la couche d'argent. De la même manière, on a déposé une couche de 2,3 nm de Ti sur la couche d'argent IR3 de sorte à obtenir une couche absorbante Abs3 de 9 Å dans le produit fini.

Les propriétés obtenues sont les suivantes : la sélectivité est de 2,036 ; l'absorption énergétique est de 42,7% ; le facteur solaire g est de 24,5% ; la transmission lumineuse $T_L$ est de 49,9%. La teinte en transmission est représentée par les valeurs suivantes : $a^*_{TL}$ = -6,5 ; $b^*_{TL}$ = -1. La teinte en réflexion côté empilage est représentée par les valeurs suivantes : $L^*_{RC}$ = 43,3 ; $a^*_{RC}$ = -5,5 ; $b^*_{RC}$ = -2,5. La teinte en réflexion côté substrat est représentée par les valeurs suivantes : $L^*_{RV}$ = 39,3 ; $a^*_{RV}$ = -2,2 ; $b^*_{RV}$ = -3,4. Les variations de teinte en réflexion côté substrat selon l'angle d'observation (entre 0 et 55°) sont les suivantes : Shift a* = - 2,4 ; Shift b* = 0,5. L'indice de variation Deltacol ($R_V$) est de 1,2.

**Exemples 31 à 36.**

Les exemples 31 à 36 sont réalisés de la même manière et selon des structures similaires aux exemples 1 à 27. Les différences sont spécifiées ci-après.

Dans l'exemple 31, le revêtement diélectrique transparent D1 est formé d'une épaisseur optique de 57 nm de $Si_3N_4$ et d'une épaisseur optique de 19 nm de ZnO ; le revêtement diélectrique transparent D2 est formé d'une épaisseur optique de 118,6 nm de $Si_3N_4$ et d'une épaisseur optique de 39,5 nm de ZnO ; le revêtement diélectrique transparent D3 est formé d'une épaisseur optique de 39,1 nm de $Si_3N_4$ et d'une épaisseur optique de 26 nm de ZnO ; et le revêtement diélectrique transparent D4 est formé d'une épaisseur optique de 17,9 nm de ZnO et d'une épaisseur optique de 26,9 nm de $Si_3N_4$.

Dans l'exemple 32, le revêtement diélectrique transparent D4 est formé d'une épaisseur optique de 17,9 nm de ZnO et d'une épaisseur optique de 26,9 nm de $Al_2O_3$. Les revêtements diélectriques transparents D1, D2 et D3 sont formés des mêmes matériaux que les exemples 1 à 27 et selon les mêmes conditions.

Dans l'exemple 33, le revêtement diélectrique transparent D1 est formé d'une épaisseur optique de 57 nm de $TiO_2$ et d'une épaisseur optique de 19 nm de ZnO. Les revêtements diélectriques transparents D2, D3 et D4 sont formés des mêmes matériaux que les exemples 1 à 27 et selon les mêmes conditions.

Dans l'exemple 34, le revêtement diélectrique transparent D1 est formé d'une épaisseur optique de 57 nm de ZSO5 et d'une épaisseur optique de 19 nm de ZnO ; le revêtement diélectrique transparent D2 est formé d'une épaisseur optique de 20,5 nm de ZnO:Al (ZnO dopé à 2% en poids d'Al), d'une épaisseur optique de 118,6 nm de ZSO5 et d'une épaisseur optique de 19 nm de ZnO ; le revêtement diélectrique transparent D3 est formé d'une épaisseur optique de 13 nm de ZnO:Al (ZnO dopé à 2% en poids d'Al), d'une épaisseur optique de 39,1 nm de ZSO5 et d'une épaisseur optique de 13 nm de ZnO ; et le revêtement diélectrique transparent D4 est formé d'une épaisseur optique de 17,9 nm de ZnO:Al (ZnO dopé à 2% en poids d'Al), d'une épaisseur optique de 23,5 nm de ZSO5 et d'une couche externe, faisant partie du revêtement diélectrique transparent D4, de 3,4 nm d'épaisseur optique de $TiO_2$ est ensuite déposée sur la couche de ZSO5.

Dans les exemples 35 et 36, les structures sont de nouveau similaires aux exemples 1 à 27, mais la couche absorbante Abs1 a été modifiée. Dans l'exemple 35, la couche absorbante Abs1 est formée de 2,3 nm de Cr. Au moment du dépôt, on dépose une épaisseur géométrique de 2,3 nm de Cr à partir d'une cathode métallique de Cr pulvérisée dans une atmosphère neutre, et on dépose ensuite 1,4 nm de Ti qui sert de couche sacrificielle de protection B1, cette dernière s'oxyde lors du dépôt du second revêtement diélectrique pour former du $TiO_2$ transparent. Dans l'exemple 36, la couche absorbante Abs1 est formée de 1,8 nm de Zn. Au moment du dépôt, on dépose une épaisseur géométrique de 1,8 nm de Zn à partir d'une cathode métallique de Zn pulvérisée dans une atmosphère neutre, et on dépose ensuite 1,4 nm de Ti qui sert de couche sacrificielle de protection, cette dernière s'oxyde lors du dépôt du second revêtement diélectrique pour

former du TiO$_2$ transparent. Les propriétés sont données dans le tableau 2 ci-après.

**Exemples 37 et 38.**

Les exemples 37 et 38 sont aussi réalisés de la même manière et selon des structures similaires aux exemples 1 à 27. Les différences sont spécifiées ci-après.

Dans l'exemple 37, la couche absorbante Abs3' à caractère métallique est disposée sous la couche fonctionnelle d'argent IR3. Il s'agit d'une couche de Ti de 1,2 nm d'épaisseur géométrique.

Dans l'exemple 38, la couche à caractère métallique absorbante dans le visible est constituée d'une épaisseur géométrique de 1,5 nm de Pd insérée entre deux couches de Si$_3$N$_4$ d'épaisseur optique de 23,6 nm chacune, l'ensemble étant disposé entre la couche de protection B1 et le revêtement diélectrique transparent D2. Dans le tableau 1, la valeur de 15 Å pour la couche absorbante a été mise entre parenthèse dans la colonne Abs1 pour signifier que cette couche n'est en fait pas au bon endroit dans la séquence de la structure réelle, puisque la couche absorbante se trouve en réalité au-delà de la couche B1, enfermée entre deux couches Si$_3$N$_4$. La séquence est en réalité la suivante : .../IR1/B1/Si$_3$N$_4$/Abs1/-Si$_3$N$_4$/ZSO5/ZSO9/IR2/... L'épaisseur optique de ZSO5 est de 69,2 nm et l'épaisseur optique de ZSO9 est de 29,6 nm, auxquelles il faut ajouter les épaisseurs optiques des deux couches de Si$_3$N$_4$, ce qui fait un total de 146 nm pour le revêtement diélectrique transparent tel qu'indiqué en colonne D2 du tableau 1.

Tableau 1.

| Ex. | D1 | IR1 | Abs1 | B1 | D2 | IR2 | Abs2 | B2 | D3 | Abs3' | IR3 | Abs3 | B3 | D4 | D1/D4 | D3/D2 | IR3/IR2 | D3/D4 | D3/IR3 | D2/D1 |
|---|---|---|---|---|---|---|---|---|---|---|---|---|---|---|---|---|---|---|---|---|
| 1 | 820 | 138 | 13 | 14 | 1566 | 118 | 0 | 14 | 1005 |  | 95 | 13 | 14 | 399 | 2,06 | 0,64 | 0,81 | 2,52 | 10,58 | 1,91 |
| 2 | 810 | 165 | 11 | 14 | 1626 | 102 | 5 | 14 | 808 |  | 88 | 5 | 14 | 412 | 1,96 | 0,50 | 0,86 | 1,96 | 9,20 | 2,01 |
| 3 | 840 | 155 | 35 | 14 | 1601 | 116 | 0 | 14 | 591 |  | 64 | 0 | 14 | 363 | 2,31 | 0,37 | 0,55 | 1,63 | 9,20 | 1,91 |
| 4 | 793 | 154 | 28 | 14 | 1569 | 104 | 0 | 14 | 641 |  | 81 | 0 | 14 | 434 | 1,83 | 0,41 | 0,77 | 1,48 | 7,94 | 1,98 |
| 5 | 930 | 100 | 13 | 14 | 1642 | 165 | 0 | 14 | 1435 |  | 142 | 19 | 14 | 639 | 1,46 | 0,87 | 0,86 | 2,25 | 10,08 | 1,77 |
| 6 | 1005 | 95 | 14 | 14 | 1653 | 164 | 0 | 14 | 1450 |  | 143 | 20 | 14 | 660 | 1,52 | 0,88 | 0,87 | 2,20 | 10,11 | 1,64 |
| 7 | 832 | 115 | 10 | 14 | 1763 | 147 | 1 | 14 | 781 |  | 91 | 7 | 14 | 357 | 2,33 | 0,44 | 0,62 | 2,18 | 8,58 | 2,12 |
| 8 | 857 | 114 | 11 | 14 | 1767 | 152 | 0 | 14 | 801 |  | 80 | 11 | 14 | 296 | 2,89 | 0,45 | 0,52 | 2,70 | 10,05 | 2,06 |
| 9 | 886 | 116 | 10 | 14 | 1722 | 138 | 0 | 14 | 866 |  | 104 | 10 | 14 | 397 | 2,23 | 0,50 | 0,76 | 2,18 | 8,30 | 1,94 |
| 10 | 903 | 115 | 11 | 14 | 1697 | 134 | 0 | 14 | 888 |  | 109 | 10 | 14 | 414 | 2,18 | 0,52 | 0,82 | 2,14 | 8,11 | 1,88 |
| 11 | 825 | 130 | 14 | 14 | 1521 | 122 | 2 | 14 | 1065 |  | 118 | 8 | 14 | 464 | 1,78 | 0,70 | 0,97 | 2,30 | 9,05 | 1,84 |
| 12 | 908 | 115 | 11 | 14 | 1591 | 128 | 0 | 14 | 1065 |  | 127 | 13 | 14 | 464 | 1,96 | 0,67 | 0,99 | 2,30 | 8,39 | 1,75 |
| 13 | 666 | 148 | 27 | 14 | 1345 | 65 | 0 | 14 | 841 |  | 126 | 0 | 14 | 617 | 1,08 | 0,63 | 1,94 | 1,36 | 6,67 | 2,02 |
| 14 | 664 | 161 | 23 | 14 | 1459 | 82 | 0 | 14 | 758 |  | 108 | 0 | 14 | 540 | 1,23 | 0,52 | 1,32 | 1,40 | 6,99 | 2,20 |
| 15 | 786 | 157 | 23 | 14 | 1489 | 95 | 0 | 14 | 768 |  | 102 | 0 | 14 | 489 | 1,61 | 0,52 | 1,07 | 1,57 | 7,51 | 1,89 |
| 16 | 966 | 123 | 12 | 14 | 1525 | 116 | 4 | 14 | 1093 |  | 128 | 9 | 14 | 481 | 2,01 | 0,72 | 1,10 | 2,27 | 8,54 | 1,58 |
| 17 | 1052 | 150 | 19 | 14 | 1468 | 108 | 0 | 14 | 953 |  | 118 | 0 | 14 | 485 | 2,17 | 0,65 | 1,09 | 1,96 | 8,10 | 1,40 |
| 18 | 952 | 115 | 12 | 14 | 1676 | 123 | 2 | 14 | 953 |  | 125 | 7 | 14 | 458 | 2,08 | 0,57 | 1,02 | 2,08 | 7,63 | 1,76 |
| 19 | 962 | 112 | 15 | 14 | 1518 | 127 | 0 | 14 | 1128 |  | 133 | 11 | 14 | 487 | 1,97 | 0,74 | 1,05 | 2,31 | 8,47 | 1,58 |
| 20 | 910 | 103 | 11 | 14 | 1619 | 157 | 7 | 14 | 1407 |  | 161 | 8 | 14 | 680 | 1,34 | 0,87 | 1,02 | 2,07 | 8,75 | 1,78 |
| 21 | 779 | 112 | 10 | 14 | 1564 | 143 | 8 | 14 | 1352 |  | 150 | 9 | 14 | 605 | 1,29 | 0,86 | 1,05 | 2,23 | 9,04 | 2,01 |
| 22 | 796 | 97 | 13 | 14 | 1249 | 147 | 0 | 14 | 1695 |  | 168 | 10 | 14 | 731 | 1,09 | 1,36 | 1,14 | 2,32 | 10,08 | 1,57 |
| 23 | 888 | 102 | 7 | 14 | 1356 | 152 | 8 | 14 | 1722 |  | 173 | 10 | 14 | 717 | 1,24 | 1,27 | 1,14 | 2,40 | 9,94 | 1,53 |
| 24 | 410 | 56 | 2 | 14 | 1000 | 93 | 3 | 14 | 1600 |  | 189 | 27 | 14 | 707 | 0,58 | 1,60 | 2,04 | 2,26 | 8,48 | 2,44 |
| 25 | 669 | 66 | 4 | 14 | 1141 | 93 | 8 | 14 | 1632 |  | 223 | 1 | 14 | 656 | 1,02 | 1,43 | 2,40 | 2,49 | 7,33 | 1,71 |
| 26 | 744 | 83 | 9 | 14 | 1278 | 132 | 0 | 14 | 1650 |  | 184 | 13 | 14 | 654 | 1,14 | 1,29 | 1,39 | 2,52 | 8,99 | 1,72 |
| 27 | 805 | 94 | 6 | 14 | 1326 | 142 | 9 | 14 | 1707 |  | 177 | 11 | 14 | 678 | 1,19 | 1,29 | 1,25 | 2,52 | 9,62 | 1,65 |
| 28 | 871 | 159 | 27 | 14 | 1532 | 95 | 0 | 14 | 749 |  | 99 | 0 | 14 | 496 | 1,76 | 0,49 | 1,04 | 1,51 | 7,55 | 1,76 |
| 29 | 976 | 126 | 13 | 14 | 1742 | 138 | 0 | 14 | 915 |  | 93 | 15 | 14 | 335 | 2,91 | 0,53 | 0,67 | 2,73 | 9,89 | 1,79 |
| C1 | 0 | 100 | - | 50 | 1125 | 135 | - | 50 | 941 | 12 | 100 | 60 | 14 | 104 | - | 0,85 | 0,74 | 6,34 | 10,27 | - |
| 31 | 761 | 163 | 29 | 14 | 1582 | 103 | 0 | 14 | 651 |  | 81 | 0 | 14 | 448 | 1,70 | 0,41 | 0,78 | 1,45 | 8,09 | 2,08 |
| 32 | 761 | 163 | 29 | 14 | 1582 | 103 | 0 | 14 | 651 |  | 81 | 0 | 14 | 448 | 1,70 | 0,41 | 0,78 | 1,45 | 8,09 | 2,08 |
| 33 | 761 | 163 | 29 | 14 | 1582 | 103 | 0 | 14 | 651 |  | 81 | 0 | 14 | 448 | 1,70 | 0,41 | 0,78 | 1,45 | 8,09 | 2,08 |
| 34 | 761 | 163 | 29 | 14 | 1582 | 103 | 0 | 14 | 651 |  | 81 | 0 | 14 | 448 | 1,70 | 0,41 | 0,78 | 1,45 | 8,09 | 2,08 |
| 35 | 761 | 163 | 29 | 14 | 1582 | 103 | 0 | 14 | 651 |  | 81 | 0 | 14 | 448 | 1,70 | 0,41 | 0,78 | 1,45 | 8,09 | 2,08 |
| 36 | 761 | 163 | 23 | 14 | 1582 | 103 | 0 | 14 | 651 |  | 81 | 0 | 14 | 448 | 1,70 | 0,41 | 0,78 | 1,45 | 8,09 | 2,08 |
| 37 | 1005 | 97 | 18 | 14 | 1697 | 164 | 0 | 14 | 1450 |  | 143 | 0 | 14 | 674 | 1,49 | 0,85 | 0,87 | 2,15 | 10,11 | 1,69 |
| 38 | 664 | 161 | (15) | 12 | 1460 | 93 | 0 | 14 | 778 |  | 112 | 0 | 14 | 540 | 1,23 | 0,53 | 1,20 | 1,44 | 6,98 | 2,20 |

18

Tableau 2.

| Ex. | S | A_E % | g % | TL % | a* (T_L) | b* (T_L) | L* (R_C) | a* (R_C) | b* (R_C) | L* (R_V) | a* (R_V) | b* (R_V) | Shift a* | Shift b* | Deltacol (R_V) | Deltacol (R_C) |
|---|---|---|---|---|---|---|---|---|---|---|---|---|---|---|---|---|
| 1 | 1,92 | 42 | 24,7 | 47,4 | -6,5 | 0,9 | 44,1 | -4,7 | 5,4 | 41,0 | -4,4 | -12,9 | -1,6 | 3,1 | 2,5 | - |
| 2 | 1,94 | 39 | 24,8 | 48,1 | -6,5 | 2,4 | 46,9 | -8,3 | 4,5 | 46,9 | -2,6 | -13,3 | -3,0 | 2,2 | 2,5 | 3,6 |
| 3 | 1,93 | 42 | 23,2 | 44,9 | -7,2 | 1,1 | 42,2 | -7,5 | -0,4 | 50,1 | -3,6 | -12,1 | -1,7 | -0,1 | 1,5 | 3,0 |
| 4 | 1,95 | 40 | 24,6 | 47,8 | -7,0 | 1,4 | 42,3 | -6,0 | -1,7 | 48,4 | -3,5 | -12,5 | -2,2 | 0,6 | 1,9 | 2,4 |
| 5 | 1,95 | 45 | 24,7 | 48,3 | -8,4 | -3,5 | 37,8 | 3,7 | -6,0 | 37,6 | -2,4 | -3,4 | 0,9 | 3,5 | 2,1 | - |
| 6 | 1,95 | 46 | 24,7 | 48,2 | -8,5 | -3,3 | 37,5 | 3,2 | -5,4 | 37,7 | -2,4 | -3,3 | 0,8 | 3,6 | 2,1 | - |
| 7 | 1,94 | 41 | 24,8 | 48,2 | -7,8 | 2,2 | 46,8 | 7,1 | 5,8 | 47,0 | -4,9 | -13,3 | -1,7 | 2,9 | 1,8 | 1,9 |
| 8 | 1,93 | 42 | 24,4 | 47,2 | -7,6 | 2,4 | 45,5 | 6,1 | 5,8 | 46,2 | -4,5 | -13,4 | -1,5 | 3,0 | 1,9 | - |
| 9 | 1,95 | 42 | 24,7 | 48,1 | -7,7 | 1,8 | 45,8 | 6,1 | 5,8 | 45,8 | -4,9 | -12,3 | -1,6 | 3,4 | 1,8 | 1,9 |
| 10 | 1,95 | 42 | 24,7 | 48,2 | -8,0 | 1,5 | 45,5 | 5,9 | 5,8 | 45,0 | -4,9 | -12,2 | -1,6 | 3,5 | 1,7 | 2,0 |
| 11 | 1,94 | 44 | 24,7 | 48,0 | -8,3 | -0,2 | 43,8 | 4,6 | 5,5 | 41,6 | -4,9 | -10,9 | -0,6 | 3,4 | 1,9 | - |
| 12 | 1,94 | 43 | 24,7 | 48,0 | -8,1 | -0,8 | 43,6 | 4,2 | 5,6 | 40,9 | -4,8 | -8,8 | 0,0 | 3,5 | 2,0 | 2,0 |
| 13 | 1,92 | 41 | 24,5 | 47,0 | -6,7 | 1,5 | 41,9 | -3,2 | -7,0 | 50,1 | -4,8 | -9,7 | -3,2 | 0,0 | 2,5 | 4,4 |
| 14 | 1,95 | 39 | 24,5 | 47,7 | -6,5 | 1,1 | 43,4 | -6,6 | -3,2 | 50,7 | -4,5 | -9,3 | -2,2 | -0,2 | 2,4 | 3,3 |
| 15 | 1,97 | 40 | 24,8 | 48,9 | -7,0 | 1,0 | 42,7 | -5,6 | -1,8 | 47,6 | -4,6 | -10,9 | -0,9 | 0,0 | 2,2 | 2,6 |
| 16 | 1,94 | 44 | 24,8 | 48,0 | -7,8 | -1,0 | 43,4 | -0,2 | 5,2 | 38,2 | -4,9 | -11,1 | 0,6 | 3,4 | 2,2 | 1,7 |
| 17 | 2,03 | 40 | 25,1 | 50,8 | -7,5 | 2,2 | 43,4 | -4,6 | -1,7 | 44,6 | -5,0 | -14,1 | 1,1 | 1,5 | 2,5 | 3,8 |
| 18 | 1,94 | 43 | 24,9 | 48,4 | -8,0 | 0,7 | 46,6 | 5,7 | 6,3 | 44,2 | -5,1 | -11,2 | -2,9 | 3,7 | 1,3 | 2,0 |
| 19 | 1,95 | 45 | 24,8 | 48,4 | -8,6 | -1,3 | 42,5 | 2,0 | 5,0 | 38,6 | -4,9 | -9,1 | 0,2 | 3,3 | 1,8 | - |
| 20 | 1,97 | 45 | 25,0 | 49,3 | -8,8 | -4,1 | 39,1 | 7,6 | -0,1 | 35,9 | -2,5 | -3,3 | 1,1 | 3,1 | 1,6 | 2,8 |
| 21 | 1,93 | 44 | 25,0 | 48,1 | -8,0 | -4,0 | 39,7 | 6,4 | -0,5 | 35,2 | -3,7 | -5,4 | -0,3 | 3,9 | 1,4 | 2,7 |
| 22 | 1,99 | 43 | 24,6 | 48,9 | -6,9 | 2,1 | 43,8 | -7,3 | -3,7 | 38,5 | -3,6 | -5,4 | -2,6 | 2,8 | 1,8 | - |
| 23 | 1,99 | 43 | 24,6 | 48,9 | -6,3 | -0,2 | 43,5 | -7,2 | -0,9 | 39,4 | -4,1 | -6,8 | -2,2 | 2,9 | 1,8 | 3,6 |
| 24 | 1,93 | 43 | 24,1 | 46,6 | -8,2 | 2,9 | 44,3 | 3,5 | -1,3 | 42,8 | -4,8 | -12,0 | 1,1 | 2,6 | 1,5 | 2,3 |
| 25 | 1,96 | 43 | 24,9 | 48,8 | -8,4 | 2,2 | 53,4 | 6,1 | 1,5 | 46,4 | -5,1 | -10,0 | -3,3 | 2,0 | 1,7 | 6,8 |

EP 2 577 368 B2

(suite)

| Ex. | S | A$_E$ % | 9 % | TL % | a* (T$_L$) | b* (T$_L$) | L* (R$_C$) | a* (R$_C$) | b* (R$_C$) | L* (R$_V$) | a* (R$_V$) | b* (R$_V$) | Shift a* | Shift b* | Deltacol (R$_V$) | Deltacol (R$_C$) |
|---|---|---|---|---|---|---|---|---|---|---|---|---|---|---|---|---|
| 26 | 1,98 | 44 | 24,6 | 48,7 | -6,7 | 1,6 | 45,3 | -5,7 | 0,4 | 38,2 | -4,6 | -8,5 | -1,6 | 2,7 | 1,8 | - |
| 27 | 1,97 | 43 | 24,5 | 48,2 | -6,4 | 0,2 | 44,4 | -6,5 | 0,1 | 39,2 | -4,7 | -10,3 | -1,8 | 2,9 | 1,8 | 3,7 |
| 28 | 1,97 | 40 | 24,3 | 47,9 | -7,2 | 2,7 | 42,9 | -5,2 | -4,5 | 49,1 | -3,5 | -13,9 | -3,6 | 1,8 | 2,2 | 2,7 |
| 29 | 1,94 | 43,7 | 23,0 | 44,8 | -7,1 | 3,5 | 45,9 | 2,0 | 5,8 | 45,3 | -6,6 | -16,8 | -1,6 | 4,0 | 1,9 | 4,9 |
| C1 | | 39,5 | | 36,1 | -11,6 | 1,8 | 41 | 3,9 | -20,2 | 32,3 | -1 | -19,2 | | | | |
| 31 | 1,91 | 38,8 | 24,4 | 46,5 | -6,3 | 0,1 | 43,2 | -7,2 | -2,4 | 51,4 | -2,5 | -12,4 | -3,7 | 1,2 | | |
| 32 | 1,94 | 39,6 | 24,0 | 46,5 | -6,7 | 1,6 | 43,2 | -7,5 | -2,7 | 51,3 | -4,3 | -11,6 | -3,1 | 0,8 | | |
| 33 | 1,93 | 40 | 25,0 | 48,3 | -7,0 | -0,6 | 41,5 | -4,8 | -1,5 | 47,4 | -1,4 | -10,2 | -3,5 | 0,1 | | |
| 34 | 1,95 | 39,6 | 23,9 | 46,5 | -7,0 | 1,9 | 43,0 | -6,5 | -2,7 | 51,1 | -2,4 | -12,2 | -3,6 | 1,5 | | |
| 35 | 1,90 | 39 | 24,4 | 46,4 | -5,2 | 0,7 | 41,1 | -3,9 | -3,4 | 48,9 | -3,2 | -12,4 | -3,1 | 1,3 | | |
| 36 | 1,93 | 39,6 | 23,8 | 46,0 | -11,1 | -3,1 | 44,7 | -9,3 | -3,0 | 51,1 | -1,0 | -8,0 | -1,2 | -0,7 | | |
| 37 | 1,96 | 39,6 | 25,9 | 50,6 | -8,2 | -1,5 | 38,3 | 4,7 | -4,0 | 37,2 | -0,9 | -10 | 1,1 | 4,9 | | |
| 38 | 1,93 | 37,6 | 25,1 | 48,4 | -5,3 | 3,2 | 41,7 | 0,5 | -2,9 | 48,4 | -6,9 | -13,5 | -2,2 | 1,2 | | |

**Revendications**

1. Substrat transparent portant un empilage multicouche de contrôle solaire comprenant au moins n couches fonctionnelles à base d'un matériau réfléchissant le rayonnement infrarouge et (n+1) revêtements diélectriques transparents de telle sorte que chaque couche fonctionnelle soit entourée par des revêtements diélectriques transparents, n étant supérieur ou égal à 3,

   où l'empilage comprend au moins une couche à caractère métallique absorbante dans le rayonnement visible située à l'intérieur de l'empilage,
   où le rapport de l'épaisseur optique du revêtement diélectrique transparent disposé entre la deuxième et la troisième couche fonctionnelle, en partant du substrat, sur l'épaisseur optique du revêtement diélectrique transparent final disposé au-delà de la dernière couche fonctionnelle est compris entre 1,25 et 3,0,
   et **caractérisé en ce que** le rapport de l'épaisseur optique du revêtement diélectrique transparent disposé entre la deuxième et la troisième couche fonctionnelle, en partant du substrat, sur l'épaisseur géométrique de la troisième couche fonctionnelle est compris entre 6,4 et 11,
   où la couche absorbante a une épaisseur d'au plus 7 nm et d'au moins 1 nm.

2. Substrat transparent selon la revendication 1, **caractérisé en ce que** le rapport de l'épaisseur optique du revêtement diélectrique transparent disposé entre la deuxième et la troisième couche fonctionnelle, en partant du substrat, sur l'épaisseur optique du revêtement diélectrique transparent final disposé au-delà de la dernière couche fonctionnelle est compris entre 1,3 et 2,6.

3. Substrat transparent selon l'une des revendications 1 ou 2, **caractérisé en ce que** le rapport de l'épaisseur optique du revêtement diélectrique transparent disposé entre la deuxième et la troisième couche fonctionnelle, en partant du substrat, sur l'épaisseur optique du revêtement diélectrique transparent disposé entre la première et la deuxième couche fonctionnelle est compris entre 0,3 et 1,7.

4. Substrat transparent selon l'une des revendications précédentes, **caractérisé en ce que** le rapport de l'épaisseur optique du revêtement diélectrique transparent disposé entre la première et la deuxième couche fonctionnelle, en partant du substrat, sur l'épaisseur optique du revêtement diélectrique transparent disposé entre le substrat et la première couche fonctionnelle est compris entre 1,15 et 3,4, de préférence entre 1,2 et 3.

5. Substrat transparent selon l'une des revendications précédentes, **caractérisé en ce que** le rapport de l'épaisseur optique du revêtement diélectrique transparent disposé entre le substrat et la première couche fonctionnelle, en partant du substrat, sur l'épaisseur optique du revêtement diélectrique transparent disposé au-delà de la dernière couche fonctionnelle est compris entre 0,3 et 3,3.

6. Substrat transparent selon l'une des revendications précédentes, **caractérisé en ce que** le rapport de l'épaisseur géométrique de la troisième couche fonctionnelle, en partant du substrat, sur l'épaisseur géométrique de la deuxième couche fonctionnelle est compris entre 0,45 et 2,8, de préférence entre 0,5 et 1,7.

7. Substrat transparent selon l'une des revendications précédentes, **caractérisé en ce que** la dite couche absorbante est disposée à proximité immédiate d'une couche fonctionnelle.

8. Substrat transparent selon la revendication 7, **caractérisé en ce que** la couche absorbante est disposée directement sur une couche fonctionnelle en ayant une interface commune avec elle.

9. Substrat transparent selon l'une des revendications précédentes, **caractérisé en ce que** l'empilage ne comprend qu'une seule couche absorbante.

10. Substrat transparent selon l'une des revendications 1 à 8, **caractérisé en ce que** l'empilage comprend plusieurs couches absorbantes, chacune d'elle étant disposée à proximité immédiate d'une couche fonctionnelle.

11. Substrat transparent selon l'une des revendications précédentes, **caractérisé en ce que** toutes les couches fonctionnelles sont à base d'argent ou d'alliage d'argent.

12. Substrat transparent selon l'une des revendications précédentes, **caractérisé en ce que** la couche absorbante a une épaisseur d'au plus 4,5 nm.

**13.** Substrat transparent selon l'une des revendications précédentes, **caractérisé en ce que,** lorsque l'empilage à contrôle solaire multicouche est déposé sur une feuille de verre float clair sodo-calcique ordinaire de 6 mm d'épaisseur, l'absorption lumineuse totale $A_L$ du vitrage monolithique revêtu est d'au moins 25%.

**14.** Substrat transparent selon l'une des revendications précédentes, **caractérisé en ce que** les variations de a* et de b* en réflexion côté substrat, lors d'une variation de l'angle d'observation comprise entre 0 et 55°, sont d'au plus 3,7 en valeur absolue.

**15.** Substrat transparent selon l'une des revendications précédentes, **caractérisé en ce que** le substrat portant l'empilage présente une sélectivité supérieure à 1,9, de préférence supérieure à 1,94 et avantageusement supérieure à 1,98.

**16.** Substrat transparent selon l'une des revendications précédentes, **caractérisé en ce que** le substrat est une feuille de verre silico-sodo-calcique ordinaire.

**17.** Substrat transparent selon l'une quelconque des revendications précédentes, **caractérisé en ce que** les épaisseurs géométriques des première, deuxième et troisième couches fonctionnelles (respectivement IR1, IR2 et IR3), en partant du substrat, sont croissantes, **en ce que** le rapport de l'épaisseur optique du second revêtement diélectrique transparent D2 sur l'épaisseur optique du premier revêtement diélectrique transparent D1 est compris entre 1,25 et 3,1, et **en ce que** le rapport de l'épaisseur optique du troisième revêtement diélectrique transparent D3 sur l'épaisseur géométrique de IR3 est compris entre 6,4 et 11.

**18.** Substrat transparent selon l'une quelconque des revendications 1 à 16, **caractérisé en ce que** les épaisseurs géométriques des première, deuxième et troisième couches fonctionnelles, en partant du substrat, sont décroissantes, **en ce que** le rapport de l'épaisseur optique du troisième revêtement diélectrique transparent D3 sur l'épaisseur géométrique de la troisième couche fonctionnelle IR3 est compris entre 7 et 11 et **en ce que** le rapport de l'épaisseur optique du premier revêtement diélectrique transparent D1 sur l'épaisseur optique du revêtement diélectrique transparent disposé au-delà de la dernière couche fonctionnelle est compris entre 1 et 2,5.

**19.** Substrat transparent selon l'une quelconque des revendications 1 à 16, **caractérisé en ce que** l'épaisseur géométrique de la deuxième couche fonctionnelle IR2 est supérieure d'au moins 5%, de préférence d'au moins 10%, aux épaisseurs géométriques des première et troisième couches fonctionnelles, **en ce que** le rapport de l'épaisseur optique de D3 sur l'épaisseur géométrique d'IR3 est compris entre 7,2 et 10 et **en ce que** le rapport de l'épaisseur optique de D1 sur l'épaisseur optique du dernier revêtement diélectrique transparent est compris entre 1,3 et 3,3.

**20.** Substrat transparent selon l'une quelconque des revendications 1 à 16, **caractérisé en ce que** les épaisseurs géométriques des trois couches fonctionnelles en partant du substrat sont égales à moins de 10% de différence, **en ce que** le rapport de l'épaisseur optique de D1 sur l'épaisseur optique du dernier revêtement est compris entre 1,2 et 2,1, et **en ce que** le rapport de l'épaisseur optique de D3 sur l'épaisseur optique de D2 est compris entre 0,5 et 0,8.

**21.** Substrat transparent selon l'une quelconque des revendications 1 à 16, **caractérisé en ce que** l'épaisseur géométrique de la deuxième couche fonctionnelle en partant du substrat est inférieure d'au moins 10% à l'épaisseur géométrique d'au moins l'une des première et troisième couches fonctionnelles et inférieure ou égale à l'épaisseur de l'autre de ces deux couches fonctionnelles, et **en ce que** le rapport de l'épaisseur optique du revêtement diélectrique transparent D3 sur l'épaisseur optique du revêtement diélectrique transparent final disposé au-delà de la dernière couche fonctionnelle en partant du substrat est inférieur à 2,6, de préférence inférieur à 2,2, avantageusement inférieur à 2.

**22.** Substrat transparent selon la revendication 21, **caractérisé en ce que** le rapport de l'épaisseur optique de D3 sur l'épaisseur géométrique d'IR3 est compris entre 6,6 et 10, et **en ce que** le rapport d'épaisseur géométrique des couches IR3 sur IR2 est compris entre 1 et 2,6.

**23.** Vitrage multiple comprenant au moins un substrat transparent selon l'une des revendications précédentes.

**24.** Vitrage feuilleté comprenant au moins un substrat transparent selon l'une quelconques des revendications 1 à 22 assemblé à une feuille de matière vitreuse à l'intervention d'une matière plastique adhésive.

**Patentansprüche**

1. Transparentes Substrat, welches einen mehrschichtigen Sonnenschutz-Schichtenstapel trägt, der wenigstens n funktionale Schichten auf der Basis eines die Infrarotstrahlung reflektierenden Materials und (n+1) transparente dielektrische Beschichtungen umfasst, derart, dass jede funktionale Schicht von transparenten dielektrischen Beschichtungen umgeben ist, wobei n größer oder gleich 3 ist,

   wobei der Stapel wenigstens eine im sichtbaren Bereich absorbierende Schicht mit metallischem Charakter umfasst, die sich im Inneren des Stapels befindet,
   wobei das Verhältnis der optischen Dicke der transparenten dielektrischen Beschichtung, die, vom Substrat aus gesehen, zwischen der zweiten und der dritten funktionalen Schicht angeordnet ist, zur optischen Dicke der abschließenden transparenten dielektrischen Beschichtung, die jenseits der letzten funktionalen Schicht angeordnet ist, zwischen 1,25 und 3,0 liegt,
   und **dadurch gekennzeichnet, dass** das Verhältnis der optischen Dicke der transparenten dielektrischen Beschichtung, die, vom Substrat aus gesehen, zwischen der zweiten und der dritten funktionalen Schicht angeordnet ist, zur geometrischen Dicke der dritten funktionalen Schicht zwischen 6,4 und 11 liegt,
   wobei die absorbierende Schicht eine Dicke von höchstens 7 nm und mindestens 1 nm aufweist.

2. Transparentes Substrat nach Anspruch 1, **dadurch gekennzeichnet, dass** das Verhältnis der optischen Dicke der transparenten dielektrischen Beschichtung, die, vom Substrat aus gesehen, zwischen der zweiten und der dritten funktionalen Schicht angeordnet ist, zur optischen Dicke der abschließenden transparenten dielektrischen Beschichtung, die jenseits der letzten funktionalen Schicht angeordnet ist, zwischen 1,3 und 2,6 liegt.

3. Transparentes Substrat nach einem der Ansprüche 1 oder 2, **dadurch gekennzeichnet, dass** das Verhältnis der optischen Dicke der transparenten dielektrischen Beschichtung, die, vom Substrat aus gesehen, zwischen der zweiten und der dritten funktionalen Schicht angeordnet ist, zur optischen Dicke der transparenten dielektrischen Beschichtung, die zwischen der ersten und der zweiten funktionalen Schicht angeordnet ist, zwischen 0,3 und 1,7 liegt.

4. Transparentes Substrat nach einem der vorhergehenden Ansprüche, **dadurch gekennzeichnet, dass** das Verhältnis der optischen Dicke der transparenten dielektrischen Beschichtung, die, vom Substrat aus gesehen, zwischen der ersten und der zweiten funktionalen Schicht angeordnet ist, zur optischen Dicke der transparenten dielektrischen Beschichtung, die zwischen dem Substrat und der ersten funktionalen Schicht angeordnet ist, zwischen 1,15 und 3,4, vorzugsweise zwischen 1,2 und 3 liegt.

5. Transparentes Substrat nach einem der vorhergehenden Ansprüche, **dadurch gekennzeichnet, dass** das Verhältnis der optischen Dicke der transparenten dielektrischen Beschichtung, die, vom Substrat aus gesehen, zwischen dem Substrat und der ersten funktionalen Schicht angeordnet ist, zur optischen Dicke der transparenten dielektrischen Beschichtung, die jenseits der letzten funktionalen Schicht angeordnet ist, zwischen 0,3 und 3,3 liegt.

6. Transparentes Substrat nach einem der vorhergehenden Ansprüche, **dadurch gekennzeichnet, dass** das Verhältnis der geometrischen Dicke der vom Substrat aus gesehen dritten funktionalen Schicht zur geometrischen Dicke der zweiten funktionalen Schicht zwischen 0,45 und 2,8, vorzugsweise zwischen 0,5 und 1,7 liegt.

7. Transparentes Substrat nach einem der vorhergehenden Ansprüche, **dadurch gekennzeichnet, dass** die absorbierende Schicht in unmittelbarer Nähe einer funktionalen Schicht angeordnet ist.

8. Transparentes Substrat nach Anspruch 7, **dadurch gekennzeichnet, dass** die absorbierende Schicht direkt auf einer funktionalen Schicht angeordnet ist, wobei sie eine gemeinsame Grenzfläche mit ihr aufweist.

9. Transparentes Substrat nach einem der vorhergehenden Ansprüche, **dadurch gekennzeichnet, dass** der Stapel nur eine einzige absorbierende Schicht umfasst.

10. Transparentes Substrat nach einem der Ansprüche 1 bis 8, **dadurch gekennzeichnet, dass** der Stapel mehrere absorbierende Schichten umfasst, wobei jede von ihnen in unmittelbarer Nähe einer funktionalen Schicht angeordnet ist.

11. Transparentes Substrat nach einem der vorhergehenden Ansprüche, **dadurch gekennzeichnet, dass** alle funktionalen Schichten auf der Basis von Silber oder einer Silberlegierung ausgebildet sind.

**12.** Transparentes Substrat nach einem der vorhergehenden Ansprüche, **dadurch gekennzeichnet, dass** die absorbierende Schicht eine Dicke von höchstens 4,5 nm aufweist.

**13.** Transparentes Substrat nach einem der vorhergehenden Ansprüche, **dadurch gekennzeichnet, dass,** wenn der mehrschichtige Sonnenschutz-Schichtenstapel auf eine Scheibe aus gewöhnlichem klarem Kalk-Natron-Floatglas von 6 mm Dicke aufgebracht ist, die Gesamtlichtabsorption AL der beschichteten monolithischen Glasscheibe mindestens 25 % beträgt.

**14.** Transparentes Substrat nach einem der vorhergehenden Ansprüche, **dadurch gekennzeichnet, dass** die Änderungen von a* und von b* bei Reflexion auf der Substratseite bei einer Änderung des Betrachtungswinkels zwischen 0 und 55° dem absoluten Betrag nach höchstens 3,7 betragen.

**15.** Transparentes Substrat nach einem der vorhergehenden Ansprüche, **dadurch gekennzeichnet, dass** das Substrat, das den Stapel trägt, eine Selektivität aufweist, die größer als 1,9, vorzugsweise größer als 1,94 und vorteilhafterweise größer als 1,98 ist.

**16.** Transparentes Substrat nach einem der vorhergehenden Ansprüche, **dadurch gekennzeichnet, dass** das Substrat eine gewöhnliche Scheibe aus Kalknatronsilikatglas ist.

**17.** Transparentes Substrat nach einem der vorhergehenden Ansprüche, **dadurch gekennzeichnet, dass** die geometrischen Dicken der ersten, zweiten und dritten funktionalen Schicht (IR1, IR2 bzw. IR3), vom Substrat aus gesehen, zunehmen, dadurch, dass das Verhältnis der optischen Dicke der zweiten transparenten dielektrischen Beschichtung D2 zur optischen Dicke der ersten transparenten dielektrischen Beschichtung D1 zwischen 1,25 und 3,1 liegt, und dadurch, dass das Verhältnis der optischen Dicke der dritten transparenten dielektrischen Beschichtung D3 zur geometrischen Dicke von IR3 zwischen 6,4 und 11 liegt.

**18.** Transparentes Substrat nach einem der Ansprüche 1 bis 16, **dadurch gekennzeichnet, dass** die geometrischen Dicken der ersten, zweiten und dritten funktionalen Schicht, vom Substrat aus gesehen, abnehmen, dadurch, dass das Verhältnis der optischen Dicke der dritten transparenten dielektrischen Beschichtung D3 zur geometrischen Dicke der dritten funktionalen Schicht IR3 zwischen 7 und 11 liegt, und dadurch, dass das Verhältnis der optischen Dicke der ersten transparenten dielektrischen Beschichtung D1 zur optischen Dicke der transparenten dielektrischen Beschichtung, die jenseits der letzten funktionalen Schicht angeordnet ist, zwischen 1 und 2,5 liegt.

**19.** Transparentes Substrat nach einem der Ansprüche 1 bis 16, **dadurch gekennzeichnet, dass** die geometrische Dicke der zweiten funktionalen Schicht IR2 um mindestens 5 %, vorzugsweise um mindestens 10 % größer ist als die geometrischen Dicken der ersten und dritten funktionalen Schicht, dadurch, dass das Verhältnis der optischen Dicke von D3 zur geometrischen Dicke von IR3 zwischen 7,2 und 10 liegt, und dadurch, dass das Verhältnis der optischen Dicke von D1 zur optischen Dicke der letzten transparenten dielektrischen Beschichtung zwischen 1,3 und 3,3 liegt.

**20.** Transparentes Substrat einem der Ansprüche 1 bis 16, **dadurch gekennzeichnet, dass** die geometrischen Dicken der drei funktionalen Schichten ab dem Substrat bis auf Abweichungen von weniger als 10 % gleich sind, dadurch, dass das Verhältnis der optischen Dicke von D1 zur optischen Dicke der letzten Beschichtung zwischen 1,2 und 2,1 liegt, und dadurch, dass das Verhältnis der optischen Dicke von D3 zur optischen Dicke von D2 zwischen 0,5 und 0,8 liegt.

**21.** Transparentes Substrat einem der Ansprüche 1 bis 16, **dadurch gekennzeichnet, dass** die geometrischen Dicken der vom Substrat aus gesehen zweiten funktionalen Schicht um mindestens 10 % kleiner als die geometrische Dicke wenigstens einer von der ersten und dritten funktionalen Schicht ist und kleiner oder gleich der Dicke der anderen von diesen zwei funktionalen Schichten ist, und dadurch, dass das Verhältnis der optischen Dicke der transparenten dielektrischen Beschichtung D3 zur optischen Dicke der abschließenden transparenten dielektrischen Beschichtung, die, vom Substrat aus gesehen, jenseits der letzten funktionalen Schicht angeordnet ist, kleiner als 2,6, vorzugsweise kleiner als 2,2 und vorteilhafterweise kleiner als 2 ist.

**22.** Transparentes Substrat nach Anspruch 21, **dadurch gekennzeichnet, dass** das Verhältnis der optischen Dicke von D3 zur geometrischen Dicke von IR3 zwischen 6,6 und 10 liegt, und dadurch, dass das Verhältnis der geometrischen Dicke der Schicht IR3 zu der von IR2 zwischen 1 und 2,6 liegt.

23. Mehrfachverglasung, welche wenigstens ein transparentes Substrat nach einem der vorhergehenden Ansprüche umfasst.

24. Verbundglasscheibe, welche wenigstens ein transparentes Substrat nach einem der Ansprüche 1 bis 22 umfasst, das mittels eines adhäsiven Kunststoffs mit einer Scheibe aus Glasmaterial verbunden ist.

**Claims**

1. Transparent substrate bearing a solar control multilayer stack comprising at least n functional layers based on a material that reflects infrared radiation and (n+1) transparent dielectric coatings such that each functional layer is surrounded by transparent dielectric coatings, with n being greater than or equal to 3,

   wherein the stack comprises at least one absorbent layer of metallic nature that is absorbent in the visible radiation spectrum and is located on the inside of the stack,
   wherein the ratio of the optical thickness of the transparent dielectric coating disposed between the second and the third functional layer, starting from the substrate, to the optical thickness of the final transparent dielectric coating disposed beyond the last functional layer is between 1.25 and 3.0,
   and **characterized in that** the ratio of the optical thickness of the transparent dielectric coating disposed between the second and the third functional layer, starting from the substrate, to the geometric thickness of the third functional layer is between 6.4 and 11,
   wherein the absorbent layer has a thickness of at most 7 nm and at least 1 nm.

2. Transparent substrate according to Claim 1, **characterized in that** the ratio of the optical thickness of the transparent dielectric coating disposed between the second and the third functional layer, starting from the substrate, to the optical thickness of the final transparent dielectric coating disposed beyond the last functional layer is between 1.3 and 2.6.

3. Transparent substrate according to either of Claims 1 and 2, **characterized in that** the ratio of the optical thickness of the transparent dielectric coating disposed between the second and the third functional layer, starting from the substrate, to the optical thickness of the transparent dielectric coating disposed between the first and the second functional layer is between 0.3 and 1.7.

4. Transparent substrate according to one of the preceding claims, **characterized in that** the ratio of the optical thickness of the transparent dielectric coating disposed between the first and the second functional layer, starting from the substrate, to the optical thickness of the transparent dielectric coating disposed between the substrate and the first functional layer is between 1.15 and 3.4, preferably between 1.2 and 3.

5. Transparent substrate according to one of the preceding claims, **characterized in that** the ratio of the optical thickness of the transparent dielectric coating disposed between the substrate and the first functional layer, starting from the substrate, to the optical thickness of the transparent dielectric coating disposed beyond the last functional layer is between 0.3 and 3.3.

6. Transparent substrate according to one of the preceding claims, **characterized in that** the ratio of the geometric thickness of the third functional layer, starting from the substrate, to the geometric thickness of the second functional layer is between 0.45 and 2.8, preferably between 0.5 and 1.7.

7. Transparent substrate according to one of the preceding claims, **characterized in that** said absorbent layer is disposed in the immediate vicinity of a functional layer.

8. Transparent substrate according to Claim 7, **characterized in that** the absorbent layer is disposed directly on a functional layer, having a common interface with it.

9. Transparent substrate according to one of the preceding claims, **characterized in that** the stack comprises only a single absorbent layer.

10. Transparent substrate according to one of Claims 1 to 8, **characterized in that** the stack comprises multiple absorbent layers, each of them being disposed in the immediate vicinity of a functional layer.

11. Transparent substrate according to one of the preceding claims, **characterized in that** all the functional layers are based on silver or silver alloy.

12. Transparent substrate according to one of the preceding claims, **characterized in that** the absorbent layer has a thickness of at most 4.5 nm.

13. Transparent substrate according to one of the preceding claims, **characterized in that,** when the multilayer solar control stack is deposited on a standard soda-lime clear float glass sheet having a thickness of 6 mm, the total light absorption AL of the coated monolithic glazing is at least 25%.

14. Transparent substrate according to one of the preceding claims, **characterized in that** the variations of a* and b* in reflection on the substrate side, during a variation of the angle of observation of between 0 and 55°, are at most 3.7 in absolute terms.

15. Transparent substrate according to one of the preceding claims, **characterized in that** the substrate bearing the stack has a selectivity greater than 1.9, preferably greater than 1.94 and advantageously greater than 1.98.

16. Transparent substrate according to one of the preceding claims, **characterized in that** the substrate is a standard soda-lime-silica glass sheet.

17. Transparent substrate according to any one of the preceding claims, **characterized in that** the geometric thicknesses of the first, second and third functional layers (respectively IR1, IR2 and IR3), starting from the substrate, increase, **in that** the ratio of the optical thickness of the second transparent dielectric coating D2 to the optical thickness of the first transparent dielectric coating D1 is between 1.25 and 3.1, and **in that** the ratio of the optical thickness of the third transparent dielectric coating D3 to the geometric thickness of IR3 is between 6.4 and 11.

18. Transparent substrate according to any one of Claims 1 to 16, **characterized in that** the geometric thicknesses of the first, second and third functional layers, starting from the substrate, decrease, **in that** the ratio of the optical thickness of the third transparent dielectric coating D3 to the geometric thickness of the third functional layer IR3 is between 7 and 11, and **in that** the ratio of the optical thickness of the first transparent dielectric coating D1 to the optical thickness of the transparent dielectric coating disposed beyond the last functional layer is between 1 and 2.5.

19. Transparent substrate according to any one of Claims 1 to 16, **characterized in that** the geometric thickness of the second functional layer IR2 is at least 5%, preferably at least 10%, greater than the geometric thicknesses of the first and third functional layers, **in that** the ratio of the optical thickness of D3 to the geometric thickness of IR3 is between 7.2 and 10, and **in that** the ratio of the optical thickness of D1 to the optical thickness of the last transparent dielectric coating is between 1.3 and 3.3.

20. Transparent substrate according to any one of Claims 1 to 16, **characterized in that** the geometric thicknesses of the three functional layers, starting from the substrate, are equal to within a difference of 10%, **in that** the ratio of the optical thickness of D1 to the optical thickness of the last coating is between 1.2 and 2.1, and **in that** the ratio of the optical thickness of D3 to the optical thickness of D2 is between 0.5 and 0.8.

21. Transparent substrate according to any one of Claims 1 to 16, **characterized in that** the geometric thickness of the second functional layer, starting from the substrate, is at least 10% less than the geometric thickness of at least one of the first and third functional layers and is less than or equal to the thickness of the other of these two functional layers, and **in that** the ratio of the optical thickness of the transparent dielectric coating D3 to the optical thickness of the final transparent dielectric coating disposed beyond the last functional layer, starting from the substrate, is less than 2.6, preferably less than 2.2, advantageously less than 2.

22. Transparent substrate according to Claim 21, **characterized in that** the ratio of the optical thickness of D3 to the geometric thickness of IR3 is between 6.6 and 10, and **in that** the ratio of the geometric thickness of the layer IR3 to that of IR2 is between 1 and 2.6.

23. Multiple glazing comprising at least one transparent substrate according to one of the preceding claims.

24. Laminated glazing comprising at least one transparent substrate according to any one of Claims 1 to 22 joined to a vitreous material sheet by means of an adhesive plastics material.

## RÉFÉRENCES CITÉES DANS LA DESCRIPTION

**Documents brevets cités dans la description**

- US 20090047466 A1, German
- WO 2009029466 A1
- EP 645352 A1